(19) Europäisches Patentamt / European Patent Office / Office européen des brevets

(11) **EP 3 118 962 A1**

(12) **EUROPEAN PATENT APPLICATION**
published in accordance with Art. 153(4) EPC

(43) Date of publication:
**18.01.2017 Bulletin 2017/03**

(51) Int Cl.:
*H02J 3/32* (2006.01)  *H02J 7/00* (2006.01)

(21) Application number: **15761637.6**

(22) Date of filing: **10.03.2015**

(86) International application number:
**PCT/JP2015/001308**

(87) International publication number:
**WO 2015/136920 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **12.03.2014 JP 2014048333**

(71) Applicant: **NEC Corporation**
**Tokyo 108-8001 (JP)**

(72) Inventors:
• **FUKUBAYASHI, Yuichiro**
**Tokyo 108-8001 (JP)**
• **KONDO, Yasuaki**
**Tokyo 108-8001 (JP)**

(74) Representative: **Vossius & Partner**
**Patentanwälte Rechtsanwälte mbB**
**Siebertstrasse 3**
**81675 München (DE)**

(54) **STORAGE BATTERY SHARING SYSTEM, INFORMATION PROCESSING DEVICE, STORAGE BATTERY SHARING METHOD, AND RECORDING MEDIUM RECORDING STORAGE BATTERY SHARING PROGRAM**

(57)    The purpose of the present invention is to provide a management device for supplying power stored in an electricity storage device to a plurality of different customers and controlling discharge amounts corresponding to requests from respective customer's facilities to the electricity storage device. The management device comprises: a dischargeable amount information acquiring means for acquiring dischargeable amount information indicating a power amount dischargeable from the electricity storage device connected to the customer's facilities; a discharge request power information acquiring means for acquiring discharge request power information indicating a discharge request power amount requested as power supplied to each of the customer's facilities from the electricity storage device; and a discharge amount determination means for, based on the dischargeable amount information and the discharge request power information, determining a storage battery discharge amount indicating a power amount discharged from the electricity storage device.

Fig.1

**Description**

**Technical Field**

The present invention relates to a technology for sharing a storage battery.

**Background Art**

In order to effectively use power, there is a technology for providing a storage battery to a plurality of detached houses, apartment houses, collective houses and the like and supplying electric power stored in the storage battery to the plurality of houses.

PTL 1 discloses a power supply system for a collective housing. This power supply system for a collective housing supplies at least one of power generated from an electric power generator and power stored in a storage battery to power supply destinations including dwelling and non-dwelling parts of the collective housing. The system sets priorities of supply destinations receiving power every time period, and controls a supply means so as to supply power according to the priorities.

PTL 2 discloses a control device that reduces power generation loss. The control device includes a prediction information storage section, a prediction section, a supply power acquisition section, and a command transmitting section. The prediction information storage section stores prediction information for predicting an electricity consumption amount at each of a plurality of user sites. The prediction section calculates a prediction value of the electricity consumption amount at each user site based on the prediction information and sums up the prediction values over the plurality of user sites to obtain a total prediction value. The supply power acquisition section acquires a planned supply power amount. The command transmitting section transmits command information for discharging a power storage device to the user site having the power storage device during a tight period of time when a difference between the planned supply power amount and the total prediction value becomes smaller than a predetermined threshold value.

**Citation List**

**Patent Literature**

   PTL 1: Japanese Unexamined Patent Application Publication No. 2012-239260
   PTL 2: Japanese Unexamined Patent Application Publication No. 2012-095455

**Summary of Invention**

**Technical Problem**

According to the technology disclosed in PTL 1, a power is supplied to a customer with the highest priority and then remaining power is supplied to customers under the second-highest priority. Accordingly, the amount of power supplied to a customer with a low priority depends on a consumption amount of the customer with a high priority. For example, even though the customer with the low priority requests the supply of power from the storage battery, there is a case in which it is not possible to receive power of an amount satisfying the request. That is, although a plurality of customers share the storage battery, there is a problem that the customers do not receive power, which corresponds to a request amount to be supplied from the storage battery, in the power storage device. In other words, it is not possible to appropriately control the power storage device in consideration of the requests of each customer for power amounts requested as power supply from the storage battery to each of the plurality of customer facilities.

According to the technology disclosed in PTL 2, the power storage device is selected such that there is no deviation in the residual capacities of a plurality of storage batteries provided to user site sides and discharge amount of the storage batteries are determined. Therefore, according to the technology disclosed in PTL 2, it is not possible to solve the problems of the technology disclosed in PTL 1.

An object of the present invention is to provide a storage battery sharing system, an information processing device, a method, and a storage battery sharing program or a computer readable non-transitory recording medium recording the program, by which it is possible to appropriately control an electricity storage device in consideration of the requests of each of a plurality of customer facilities for power amounts requested as power supply from the electricity storage device to each of the plurality of customer facilities.

**Solution to Problem**

An information processing device according to one exemplary aspect of the present invention, the device includes: remaining-discharge-capacity acquiring means for acquiring remaining-discharge-capacity information indicating a power amount which is dischargeable by an electricity storage device connected to a plurality of customer facilities; requested discharge power information acquiring means for acquiring requested discharge power information indicating a requested power amount for discharge requested as power supply to each of the plurality of customer facilities from the electricity storage device; and discharge amount determination means for determining a storage battery discharge amount indicating an amount of power, which is discharged from the electricity storage device, based on the remaining-discharge-capacity information and the requested discharge power information.

A storage battery sharing system according to one exemplary aspect of the present invention, the system includes: electricity storage means for being connected to a plurality of customer facilities and supplying power to the customer facilities; remaining-discharge-capacity information acquiring means for acquiring remaining-discharge-capacity information indicating a power amount which is dischargeable by the electricity storage means; requested discharge power information acquiring means for acquiring requested discharge power information indicating a requested power amount for discharge requested as power supply to each of the plurality of customer facilities from the electricity storage means; discharge amount determination means for determining a storage battery discharge amount indicating power, which is discharged from the electricity storage means, by using the remaining-discharge-capacity information and the requested discharge power information; and controlling means for controlling the electricity storage means according to the storage battery discharge amount.

A non-transitory computer readable recording medium stored with a storage battery sharing program according to one exemplary aspect of the present invention, which causes a computer to perform: a process of acquiring remaining-discharge-capacity information indicating a power amount which is dischargeable by an electricity storage device connected to a plurality of customer facilities; a process of acquiring requested discharge power information indicating a requested power amount for discharge requested as power supply to each of the plurality of customer facilities from the electricity storage device; and a process of determining a storage battery power amount indicating an amount of power, which is discharged from the electricity storage device, according to the acquired remaining-discharge-capacity information and requested discharge power information.

A non-transitory computer readable recording medium stored with a storage battery sharing program according to one exemplary aspect of the present invention, which causes a computer to perform: a process of determining an assignment power amount indicating a power amount of the storage battery discharge amount, which is virtually available by the customer facilities, by using remaining-discharge-capacity information indicating a power amount which is discharged by an electricity storage device connected to a plurality of customer facilities and requested discharge power information indicating a requested power amount for discharge requested as power supply to each of the plurality of customer facilities from the electricity storage device.

A storage battery discharge amount determination method according to one exemplary aspect of the present invention, the method includes: determining a storage battery discharge amount, which indicates power discharged from an electricity storage device, by using remaining-discharge-capacity information indicating a power amount which is dischargeable by the electricity storage device connected to a plurality of customer facilities and requested discharge power information indicating a requested power amount for discharge requested as power supply to each of the plurality of customer facilities from the electricity storage device.

A deemed amount determination method according to one exemplary aspect of the present invention, the method includes: determining a deemed amount, which is deemed to be received from an electricity storage device by each of a plurality of customer facilities, by using assignment power amount information indicating a power amount which is virtually suppliable to each of the plurality of customer facilities and power supply amount information indicating a power amount supplied to each of the plurality of customer facilities.

**Advantageous Effects of Invention**

According to the present invention, it is possible to appropriately control an electricity storage device in consideration of the requests of each of a plurality of customer facilities for power amounts requested as power supply from the electricity storage device to each of the plurality of customer facilities.

**Brief Description of Drawings**

[Fig. 1] Fig. 1 is a diagram illustrating an example of a configuration of a power network and a communication network in a first exemplary embodiment of the present invention.

[Fig. 2] Fig. 2 is a diagram illustrating an application example of a connection configuration of a power line and a communication circuit of a customer facility in the first exemplary embodiment.

[Fig. 3] Fig. 3 is a diagram illustrating an example of a functional block diagram of a management device in the first exemplary embodiment.

[Fig. 4] Fig. 4 is a diagram illustrating an example of remaining-discharge-capacity information, requested discharge power information, and a storage battery discharge amount in the first exemplary embodiment.

[Fig. 5] Fig. 5 is a flowchart illustrating an example of the processing flow of the management device in the first exemplary embodiment.

[Fig. 6] Fig. 6 is a diagram illustrating an application example of a connection configuration of a power line and a communication circuit of a customer facility in a second exemplary embodiment.

[Fig. 7] Fig. 7 is a diagram illustrating an example of a functional block diagram of a management device in a third exemplary embodiment.

[Fig. 8] Fig. 8 is a flowchart illustrating an example of the processing flow of the management device in the third exemplary embodiment.

[Fig. 9] Fig. 9 is a diagram illustrating an example of a storage battery discharge amount and an assignment power amount in the third exemplary embodiment.

[Fig. 10] Fig. 10 is a diagram illustrating an example of a functional block diagram of a management device in a fourth exemplary embodiment.

[Fig. 11] Fig. 11 is a flowchart illustrating an example of the processing flow of the management device in the fourth exemplary embodiment.

[Fig. 12] Fig. 12 is a diagram illustrating an example of priority information, a storage battery discharge amount, and an assignment power amount in the fourth exemplary embodiment.

[Fig. 13] Fig. 13 is a diagram illustrating an example of a functional block diagram of a management device in a fifth exemplary embodiment.

[Fig. 14] Fig. 14 is a flowchart illustrating an example of the processing flow of the management device in the fifth exemplary embodiment.

[Fig. 15] Fig. 15 is a diagram illustrating an example of a deemed amount in the fifth exemplary embodiment.

[Fig. 16] Fig. 16 is a diagram illustrating an example of a functional block diagram of a management device in a sixth exemplary embodiment.

[Fig. 17] Fig. 17 is a diagram illustrating an example of a functional block diagram of a management device in a seventh exemplary embodiment.

[Fig. 18] Fig. 18 is a diagram schematically illustrating an example of power generation prediction information in the seventh exemplary embodiment.

[Fig. 19] Fig. 19 is a diagram illustrating an example of a functional block diagram of an electricity storage device in the seventh exemplary embodiment.

[Fig. 20] Fig. 20 is a diagram illustrating an example of a functional block diagram of a management device having a minimum configuration in an eighth exemplary embodiment.

[Fig. 21] Fig. 21 is a block diagram illustrating a hardware configuration of a computer for implementing a management device in the present exemplary embodiment.

**Description of Embodiments**

[First embodiment]

Hereinafter, exemplary embodiments of the present invention will be described with reference to the drawings. It should be noted that similar reference signs are used to designate similar elements and a description thereof will be appropriately omitted.

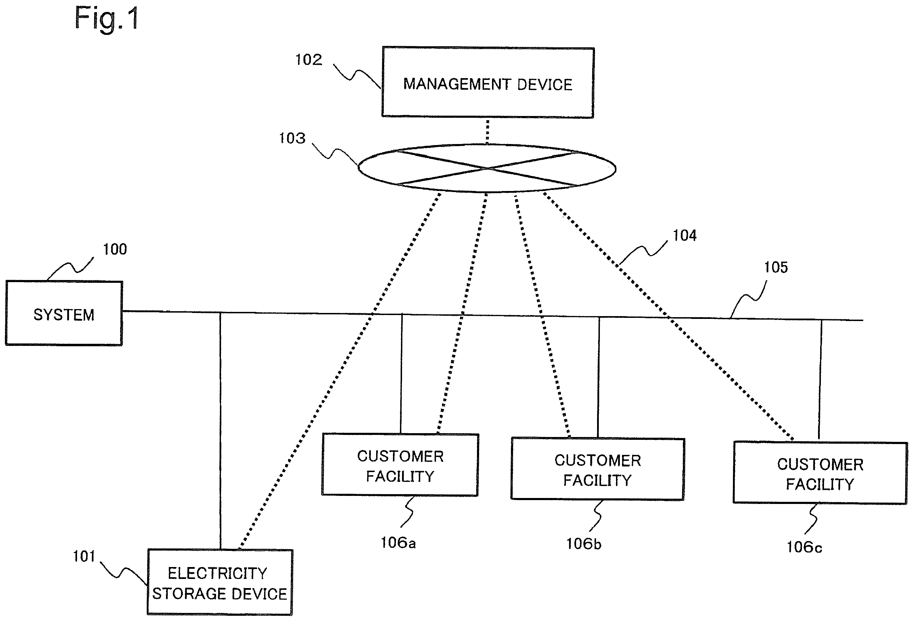

Fig. 1 illustrates a configuration of a storage battery sharing system to which a management device (also called an information processing device) 102 of the present exemplary embodiment is applied. The storage battery sharing system includes a power system 100, an electricity storage device 101, the management device 102, a plurality of customer facilities 106a to c, a distribution network 105, a network 103 such as the Internet, and a communication circuit 104.

The power system 100 is connected to the electricity storage device 101 and the plurality of customer facilities 106 via the distribution network 105. The power system 100 (a power supplier of an electric power company) supplies power to the electricity storage device 101 and the plurality of customer facilities 106a to c via the distribution network 105.

The management device 102 is connected to the electricity storage device 101 via the network 103 and the communication circuit 104. The management device 102 determines a storage battery discharge amount indicating an electronic discharge amount to be discharged from the electricity storage device 101, and instructs the electricity storage device 101 to discharge based on the storage battery discharge amount.

The electricity storage device 101 is connected to a plurality of customer facilities via the distribution network 105. The electricity storage device 101 stores power which is supplied from at least the power system 100. The electricity storage device 101 discharges the stored power according to the instruction based on the storage battery discharge amount from the management device 102, thereby supplying power to the plurality of customer facilities 106a to c.

The customer facility 106 is a building including a load 50 that receives power via the distribution network 105 and consumes the received power. For example, the building is a detached house, a collective house, a store and the like. The customer facility 106 includes a facility such as a park, a commercial facility, and a workplace, in addition to the building. Each unit, which makes a contract with a power supplier, such as each dwelling of a collective house, a common-use space of a collective house, each store of a commercial facility, and one floor of a building, may be employed as one customer facility 106. Furthermore, a plurality of buildings owned by the same customer may be employed as one customer facility. For example, in a commercial facility in which a plurality of stores exist, when each store has made a contract for receiving power from the electricity storage device 101, each store is customer facility.

The customer is a person, who uses power discharged from the electricity storage device 101 (and power supplied from the power system 100) in the customer facility 106 via the distribution network 105, or a power demand-supply contractor (for example, a contractor for receiving power from the electricity storage device 101). The customer, for example, is a representative of dwellers of a house, and is a representative of each house in the case of a collective house. Furthermore, in a commercial facility in which a plurality of stores exist, when a business owner of the commercial facility has collectively made a contact, the business owner of the commercial facility is a customer. When the customer facilities 106a to c are facilities owned by a local government and the like, the customer is the local government and the like.

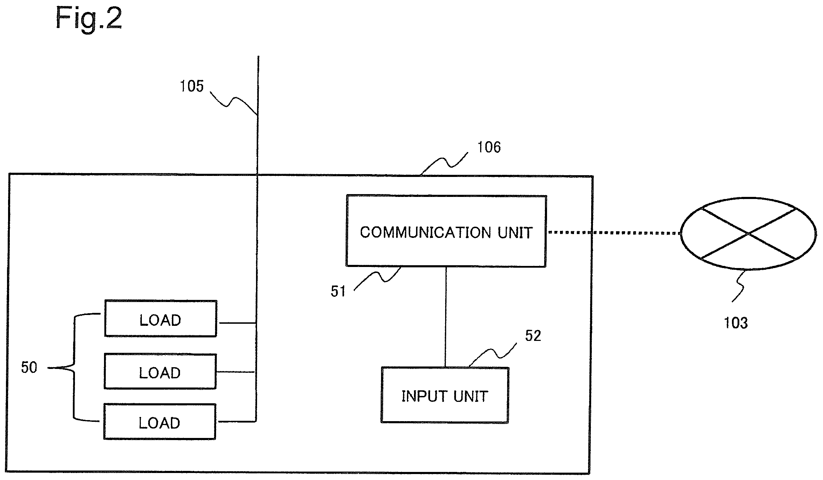

Fig. 2 is an example of a functional block diagram of the customer facilities 106a to c. The customer facility 106 has a plurality of loads 50. The loads 50 are connected to the distribution network 105 and consume at least one of the power supplied from the power system 100 and the electricity storage device 101.

The customer facility 106 may include a communication unit 51 and an input unit 52 connected by a communication circuit. The communication unit 51 is connected to the management device 102 via the network 103 such as the Internet and a LAN (Local Area Network). The customer facility 106 includes the communication unit 51 and the input unit 52, so that it is possible to transmit information from the customer facility 106 to the management device 102.

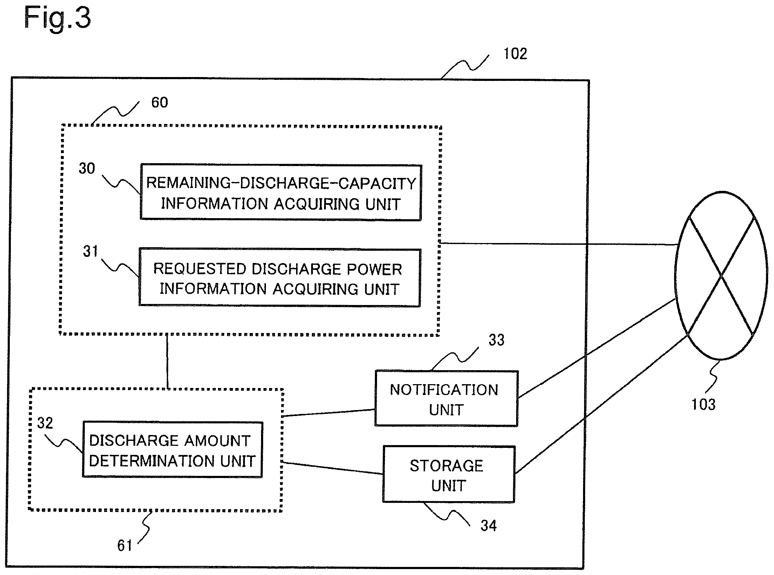

Fig. 3 illustrates an example of a functional block diagram of the management device 102 of the present exemplary embodiment. The management device 102 includes an information acquiring unit 60, a determination unit 61, a notification unit 33, and a storage unit 34. The information acquiring unit 60 is connected to an external communication device (for example, a power supplier, a management server of a collective house, and the like) via the network 103. The information acquiring unit 60 and the determination unit 61 are connected to each other by a communication circuit, and the information acquiring unit 60 transmits acquired information to the determination unit 61 via the communication circuit.

The information acquiring unit 60 includes a remaining-discharge-capacity information acquiring unit 30 and a requested discharge power information acquiring unit 31. The determination unit 61 includes a discharge amount determination unit 32.

The remaining-discharge-capacity information acquiring unit 30 acquires remaining-discharge-capacity information from the electricity storage device 101. The remaining-discharge-capacity information is information indicating amount of a power which is dischargeable from the electricity storage device 101 (a dischargeable amount). As the remaining-discharge-capacity information, for example, it is possible to use the dischargeable amount stored in the electricity storage device 101, a predetermined amount representing a stored power amount, and the like.

For example, the electricity storage device 101 may operate at a charge/discharge cycle in which power is charged up to 100% of the upper limit amount of electricity storage (SOC (State Of Charge)), a power amount related to an operation state of the loads 50 is used, and then power is charged up to the upper limit amount of electricity storage again. In this case, the remaining-discharge-capacity information acquiring unit 30 may acquire the upper limit amount of electricity storage as a dischargeable amount. Furthermore, the remaining-discharge-capacity information acquiring unit 30 may acquire an amount, which is obtained by subtracting a constant power amount (for example, 10% or 20%) from the upper limit amount of electricity storage, as a dischargeable amount. By leaving a constant power, it is possible to store an emergency power in the electricity storage device 101 for example.

The remaining-discharge-capacity information acquiring unit 30 may store in advance the dischargeable amount of the electricity storage device 101. The remaining-discharge-capacity information acquiring unit 30 may acquire the dischargeable amount at a predetermined timing. The remaining-discharge-capacity information acquiring unit 30 may monitor the power amount of the electricity storage device 101 as needed and may acquire the dischargeable amount.

The requested discharge power information acquiring unit 31 acquires requested discharge power information indicating a power amount (a requested power amount for discharge) requested for a power supply to the customer facilities 106a to c from the electricity storage device 101. The requested discharge power information can be set in each the customer facility 106. Preferably, the requested power amount for discharge is set in the range of being equal to or less than the dischargeable amount from 0. The requested discharge power information of the present exemplary embodiment is a predetermined amount determined in advance. In the present exemplary embodiment, the sum of the requested power amounts for discharge of customer facilities may be set so as not to exceed a maximum amount (a maximum storage battery discharge amount), which can be discharged by the electricity storage device 101 for a unit time, and the dischargeable amount.

The requested power amount for discharge, for example, may be a power amount agreed by a contract. The requested power amount for discharge may be a fixed value, or a value which differs every constant period (every week, every day of week, every season and the like). For example, the requested power amount for discharge may correspond to the magnitude of a contract rate at the time of contract. Furthermore, the requested power amount for discharge may be a value which differs according to the attributes of a house, an office, a factory and the like and a scale thereof.

In other examples, the requested power amount for discharge may be appropriately set by the application of each customer facility and may be changed. For example, the requested power amount for discharge may be set through the application of the requested power amount for discharge every constant period (every day, every week, every day of week, every season and the like). For example, a customer may receive the application of the requested power amount for discharge from the input unit 52 of the customer facility. Furthermore, when a requested power amount for discharge is set to in advance as a reference, increment/decrement from the reference may be set as another requested power amount for discharge. For example, when a power amount required in the short term has increased, the increment can be reflected in the requested power amount for discharge. In addition, even when a required power amount decreases due to long-term absence and the like, the decrement can be reflected in the requested power amount for discharge. For example, a customer may set the requested power amount for discharge to "0" and reject the supply of power from the electricity storage device 101. A customer sets and updates the requested discharge power information, so that a wasteful large power amount or an excessive small power amount is prevented from being used as the requested power amount for discharge. It should be noted that these operations may be automatically performed according to setting determined in advance.

Means by which the requested discharge power information acquiring unit 31 acquires the requested discharge power information are not specifically limited.

For example, when the storage unit 34 acquiring requested discharge power information stores in advance requested discharge power information of each customer facility, the requested discharge power information acquiring unit 31 may acquire the requested discharge power information from the storage unit 34. Furthermore, the requested discharge power information acquiring unit 31 may store in advance address information of an external device (for example, a management server and the like of a collective house). The requested discharge power information acquiring unit 31 may access the external device by itself at a predetermined timing, thereby acquiring requested discharge power information.

The discharge amount determination unit 32 acquires the remaining-discharge-capacity information from the remaining-discharge-capacity information acquiring unit 30 and acquires the requested discharge power information from the requested discharge power information acquiring unit 31. Based on the acquired remaining-discharge-capacity information and requested discharge power information, the discharge amount determination unit 32 determines a power amount to be discharged (a storage battery discharge amount) from the electricity storage device 101 in a predetermined period. A process for determining the storage battery discharge amount will be described later. The discharge amount determination unit 32 transmits the determined storage battery discharge amount to the notification unit 33.

A period for determining the storage battery discharge amount is a discharge time period. The discharge time period, for example, is a period excluding a charge time period such as a period from the charge completion time of the electricity storage device 101 to the charge start time of the electricity storage device 101. The discharge time period may be set in advance.

The discharge amount determination unit 32 determines the storage battery discharge amount so as to be equal to or more than 0, equal to or less than the dischargeable amount and to be equal to or less than the maximum power amount (the maximum storage battery discharge amount) which can be discharged by the electricity storage device 101 for a unit time. By determining the storage battery discharge amount within the discharge capacity of the electricity storage device 101, it is possible to reliably discharge the determined storage battery discharge amount.

Furthermore, when the sum of requested power amounts for discharge of customer facilities is equal to or less than the maximum storage battery discharge amount and is equal to or less than the dischargeable amount, the discharge amount determination unit 32 may determine the storage battery discharge amount as a value equal to the requested power amount for discharge. By so doing, the power stored in the electricity storage device 101 can be effectively used. For example, when the sum of requested power amounts for discharge of customer facilities is equal to or less than the maximum storage battery discharge amount and is equal to or less than the dischargeable amount, if a value smaller than the sum is determined as the storage battery discharge amount, the following problem occurs. According to the problem, even though the electricity storage device 101 has a remaining-discharge-capacity, the power system 100 supplies power to the customer facilities 106a to c. The electricity storage device 101 is assumed to be used at a cycle in which it stores power of a time period in which a power selling price is relatively low or power generated using natural energy and the like, and discharges power in a time period in which a power selling price is relatively high. A value equal to or more than the sum is determined as the storage battery discharge amount, so that it is possible to effectively use stored inexpensive power.

The notification unit 33 connects the discharge amount determination unit 32 to the network 103 by a communication circuit. The notification unit 33 is connected to the electricity storage device 101 via the network 103. The notification unit 33 transmits information indicating the storage battery discharge amount determined by the discharge amount determination unit 32 to the electricity storage device 101 via the network 103. The electricity storage device 101 having received the information indicating the storage battery discharge amount from the notification unit 33 controls charge/discharge according to an instruction of the received information indicating the storage battery discharge amount.

The storage unit 34 stores the remaining-discharge-capacity information, the requested discharge power information, the storage battery discharge amount, information set based on these types of information, or the like. Fig. 3 illustrates the configuration in which the management device 102 includes the storage unit 34; however, the storage unit 34 may exist on a server connected by the network 103.

The discharge amount determination unit 32 can generate a discharge schedule in which the storage battery discharge amount is determined every time period divided by a unit time. The discharge amount determination unit 32 generates the discharge schedule, so that it is possible to determine the storage battery discharge amount having considered the requests of each time period of the customer facilities 106a to c and perform discharge amount control with high precision. For example, it is possible to solve problems that the storage battery discharge amount is large in a time period in which supply requests of the customer facilities 106a to c are small and the storage battery discharge amount is small in a time period in which the supply requests of the customer facilities 106a to c are large.

In the case of generating the discharge schedule, the requested power amount for discharge may be set every time period divided by the unit time. For example, in relation to the requested power amount for discharge, requested power amount for discharges of 15 minutes, 30 minutes, 1 hour and the like may be set. In this case, the discharge amount determination unit 32 may generate the discharge schedule in which a large storage battery discharge amount is determined sequentially from a time period in which the sum of the requested discharge power information is large. A time period in which the sum of the requested power amounts for discharge is the smallest may be set as a charge time period and a remaining time period may be set as a dischargeable time period. The requested power amount for discharge is set for each of a plurality of time periods divided by the unit time, so that it is possible to more finely reflect the requests of the customer facilities 106a to c.

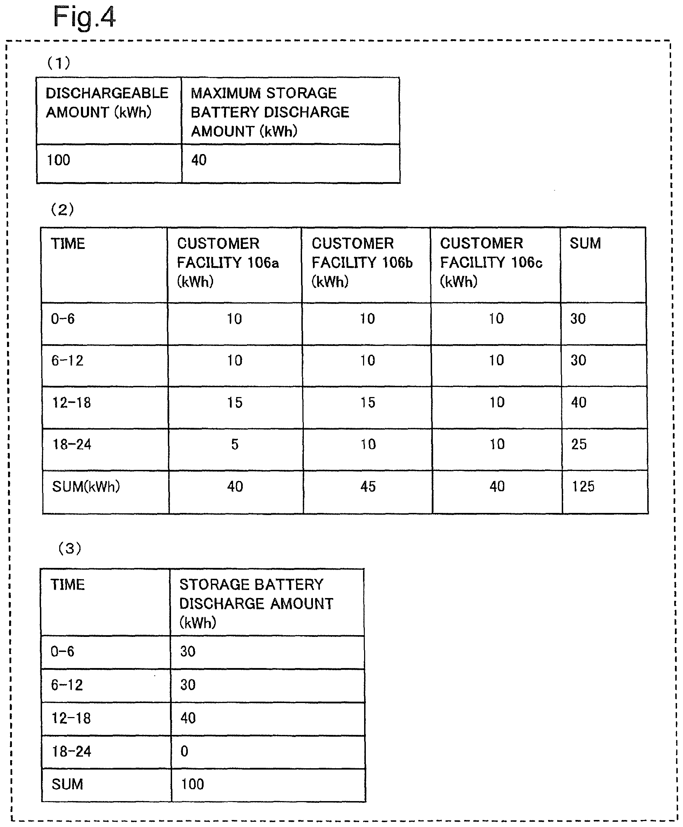

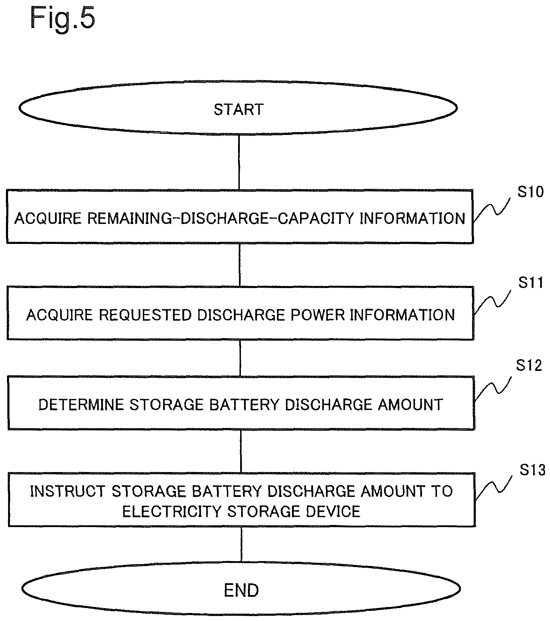

Hereinafter, an example of the processing flow of the management device 102 of the present exemplary embodiment will be described using the flowchart of Fig. 5 and Fig. 4.

In S10, the remaining-discharge-capacity information acquiring unit 30 acquires remaining-discharge-capacity information indicating a dischargeable amount, which can be supplied to the customer facilities 106a to c, from the electricity storage device 101. (1) of Fig. 4 illustrates an example of remaining-discharge-capacity information. It is assumed that a dischargeable amount is 100 kWh and a maximum storage battery discharge amount is 40 kWh.

In S11, the requested discharge power information acquiring unit 31 acquires requested discharge power information indicating a power amount requested to be supplied by a customer. (2) of Fig. 4 illustrates an example of requested discharge power information of the customer facilities 106a to c. It is assumed that the sum value per time periods of the requested discharge power information is maximal at a time period of 12 o'clock to 18 o'clock and is subsequent to 6 o'clock to 12 o'clock, 0 o'clock to 6 o'clock, and 18 o'clock to 24 o'clock.

The requested discharge power information acquiring unit 31 transmits the remaining-discharge-capacity information and the requested discharge power information acquired in S10 and S11 to the discharge amount determination unit 32. It should be noted that an order of S10 and S11 may be reverse.

In S12, the discharge amount determination unit 32 acquires the remaining-discharge-capacity information and the requested discharge power information from the remaining-discharge-capacity information acquiring unit 30 and the requested discharge power information acquiring unit 31. The discharge amount determination unit 32 determines a power amount (a storage battery discharge amount), which is discharged by the electricity storage device 101 in a predetermined period, by using the remaining-discharge-capacity information and the requested discharge power information.

In the examples illustrated in (1) and (2) of Fig. 4, it is assumed that the dischargeable amount is 100 kWh and the sum of the requested power amounts indicated by the requested discharge power information is 125 kWh. In such a case, the discharge amount determination unit 32 sets 18 o'clock to 24 o'clock, for which the requested power amount for discharge is minimal, as a charge time period. Then, the discharge amount determination unit 32 sets time periods of 0 o'clock to 6 o'clock, 6 o'clock to 12 o'clock, and 12 o'clock to 18 o'clock as dischargeable time periods, and generates a discharge schedule in which discharge amounts of the dischargeable time periods have been determined. (3) of Fig. 4 illustrates an example of the generated discharge schedule. The discharge amount determination unit 32 determines a maximum storage battery discharge amount of 40 kWh as a storage battery discharge amount at 12 o'clock to 18 o'clock, at which the requested power amount is maximal, and sets the storage battery discharge amounts of 0 o'clock to 6 o'clock and 6 o'clock to 12 o'clock such that the remaining 60 kWh is consumed.

In S 13, the notification unit 33 transmits the storage battery discharge amount determined by the discharge amount determination unit 32 to the electricity storage device 101. A system controller 23 controls the electricity storage device 101 according to the acquired storage battery discharge amount.

A description will be provided for an example of control when power is supplied to the loads 50 of the customer facilities 106a to c. For example, in a period in which the storage battery discharge amount is 0, the power system 100 supplies power to the loads 50 of the customer facilities 106a to c. That is, the electricity storage device 101 performs no discharge and supplies no power to the loads 50.

On the other hand, in a period in which a discharge amount has a value larger than 0, the electricity storage device 101 performs discharge to the distribution network 105 and supplies power to the loads 50. Then, the electricity storage device 101 stores an accumulated value of the amounts of power discharged to the distribution network 105. When the accumulated value reaches a storage battery discharge amount, the electricity storage device 101 stops the discharge. Thereafter, in the case of supplying power to the loads 50 in a related period, the power system 100 supplies power. When demand amounts of the customer facilities 106a to c become less than the storage battery discharge amount, power discharged from the electricity storage device 101 can be controlled to be supplied to the power system 100.

In the above, a time period in which the sum of requested power amounts for discharge of customer facilities is the smallest is set as a charge time period. However, the charge time period may be set in advance and a requested power amount for discharge can be configured to be set only in a time period other than the charge time period. In another example, a threshold value may be set in advance and a time period in which the sum of requested power amounts for discharge is equal to or more than the threshold value may be set as the discharge time period. For example, in a time period in which the sum of requested power amounts for discharge is smaller than the threshold value, the storage battery discharge amount is set to 0. In the time period in which the sum of requested power amounts for discharge is equal to or more than the threshold value, the maximum storage battery discharge amount is set as the storage battery discharge amount. By so doing, it is possible to determine more storage battery discharge amounts by a time period in which a request is further large. A time period in which the storage battery discharge amount is 0 can be used as the charge time period. The threshold value or the storage battery discharge amount to be determined can be appropriately changed.

In the above example, the case in which the sum of the requested power amounts for discharge of the dischargeable time period is equal to the dischargeable amount is described. However, the sum of the requested power amounts for discharge of the dischargeable time period may be smaller than the dischargeable amount. In this case, an excess dischargeable amount may not be discharged or may be discharged to the distribution network 105 in an arbitrary time period.

According to the present exemplary embodiment, when power is supplied from the electricity storage device 101 to the plurality of different customer facilities 106a to c, it is possible to control the electricity storage device 101 in consideration of the requests of the customer facilities.

Furthermore, according to the present exemplary embodiment, the storage battery discharge amount is determined as a value equal to or less than a predetermined power amount (a dischargeable amount) determined based on the remaining-discharge-capacity information and the electricity storage device 101 performs discharge according to the determined storage battery discharge amount.

[Second embodiment]

When an arbitrary value is received as requested discharge power information of each customer facility, since a storage battery discharge amount is small in a period in which power demands of the customer facilities 106a to c are large, there may be a problem that it is not possible to effectively utilize power supplied from the electricity storage device 101.

In this regard, in the present exemplary embodiment, load prediction information indicating at least one prediction value of an amount of power supplied to the customer facilities 106a to c and an amount of power consumed by the loads 50 of the customer facilities 106a to c is further used as requested discharge power information, so that a storage battery discharge amount is determined.

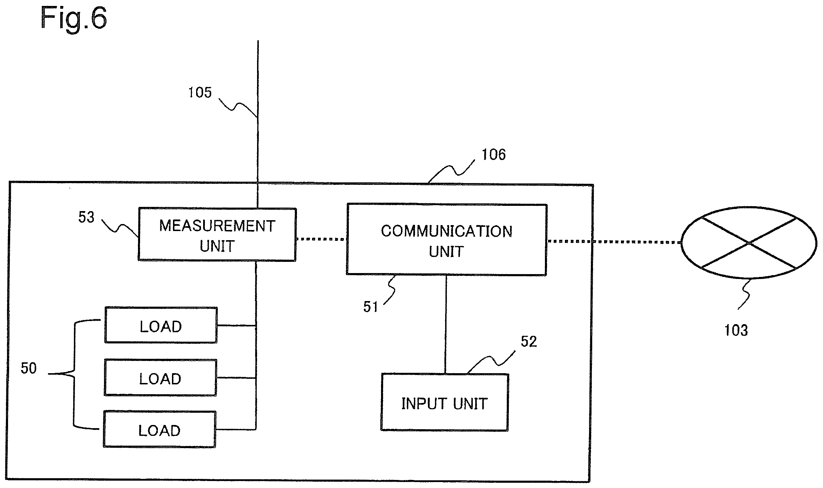

Fig. 6 is an example of a functional block diagram of the interior of the customer facility 106 in the present exemplary embodiment. As illustrated in Fig. 6, each of the customer facilities 106a to c includes the communication unit 51, the input unit 52, the loads 50, and a measurement unit 53. Each of the customer facilities 106a to c may further have a storage unit (not illustrated). The configurations of the communication unit 51, the input unit 52, and the loads 50 are similar to those of the first and second exemplary embodiments. Hereinafter, a function of generating load prediction will be described.

The load prediction information is information indicating at least one prediction value of an amount of power supplied to the customer facilities 106a to c and an amount of power consumed by the loads 50 of the customer facilities 106a to c. The measurement unit 53 measures a power supply amount and generates the load prediction information by using the measured power supply amount.

The power supply amount is an amount of power supplied to the loads 50 of the customer facilities 106a to c via the distribution network 105 or power consumed by the loads 50. The load prediction information may be a value of the measured power supply amount as is. Furthermore, a constant rate of the power supply amount may be employed as the load prediction information. For example, in each of the loads 50 of the customer facilities 106a to c, there is power always required (standby power, a refrigerator and the like) and power changed by an external environment or an operation of a customer (illumination, air conditioning and the like). Power supply amounts during a constant period of the past are compared with each other, so that it is possible to separate an amount of power always required and an amount of power changed from each other. In relation to the amount of power changed, a power supply amount may be processed in response to conditions (season, air temperature, day of week, and at-home information) of a period to be predicted and employed as a load prediction amount.

The power supply amount may be the sum value of a predetermined period (every hour, every day, every week, every month and the like). This is an item generally determined by the type of the measurement unit 53 provided in a customer. A power supply amount is acquired every short period, so that it is possible to finely reflect a demand variation of a customer. By using an actual power supply amount, it is possible to generate load prediction information according to load use situations of each customer facility.

It should be noted that as a power supply amount and demand prediction information, power amounts measured by the measurement units 53 of the customer facilities 106a to c may not be used. For example, the communication unit 51 may access a server, which provides information (demand prediction, weather, electricity cost and the like) on a power supply amount and demand prediction information, via the network 103, and acquire and generate the power supply amount and the demand prediction information. The power supply amount and the demand prediction information are acquired from an exterior, so that it is possible to generate load prediction information even when it is not possible to acquire a power supply amount by using the measurement unit 53.

The measurement unit 53 is connected to the communication unit 51 by a communication circuit. The measurement unit 53 transmits generated requested discharge power information from the communication unit 51 to the management device 102 via the network 103. The measurement unit 53 may transmit only a power supply amount. In this case, load prediction information may be generated in a load prediction information generation unit (not illustrated) provided on the network 103 and may be transmitted to the management device 102 as requested discharge power information.

An example of the functional block diagram of the management device 102 in the present exemplary embodiment is illustrated in Fig. 3, similarly to the first exemplary embodiment. Hereinafter, a process in which the discharge amount determination unit 32 determines a storage battery discharge amount will be described.

Points common to the first exemplary embodiment will be appropriately omitted.

The requested discharge power information acquiring unit 31 further acquires load prediction information. The requested discharge power information acquiring unit 31 may use load prediction information, which is transmitted from the measurement units 53 of the customer facilities 106a to c, as discharge request information as is.

Furthermore, the requested discharge power information acquiring unit 31 may employ a constant rate of demand power amounts obtained by load prediction information in advance as a requested power amount for discharge. For example, the requested discharge power information acquiring unit 31 may employ a power amount, which is defined as a power amount changed in the load prediction information, as a requested power amount for discharge.

The discharge amount determination unit 32 determines a storage battery discharge amount by using remaining-discharge-capacity information, and requested discharge power information based on the load prediction information.

According to the present exemplary embodiment as described above, it is possible to achieve operations and effects similar to those of the first exemplary embodiment.

Furthermore, according to the present exemplary embodiment, it is possible to determine a storage battery discharge amount by using requested discharge power information based on load prediction information. According to such a present exemplary embodiment, the load prediction information is considered, so that it is possible to determine a value, which is approximate to power amounts actually used in the customer facilities 106a to c in a related period, as the storage battery discharge amount. Therefore, it is possible to solve the problem that the storage battery discharge amount of the electricity storage device 101 is large in a time period in which the power demands of the customer facilities 106a to c are small and the storage battery discharge amount of the electricity storage device 101 is small in a time period in which the power demands of the customer facilities 106a to c are large.

Furthermore, according to the present exemplary embodiment, it is possible to generate a discharge schedule based on load prediction information of each time period divided by the unit time. According to such a present exemplary embodiment, it is possible to set a relatively large storage battery discharge amount in a time period in which a demand is relatively large and to perform discharge control with high precision.

[Third embodiment]

The sum value of actual requested power amount for discharges of the customer facilities 106a to c may be larger than a dischargeable amount and a maximum storage battery discharge amount. However, the discharge amount determination unit 32 determines a storage battery discharge amount based on remaining-discharge-capacity information and requested discharge power information so as not to exceed a dischargeable amount and a storage battery discharge amount. In this case, since the sum of the requested power amounts for discharge of the customer facilities 106a to c and an actual storage battery discharge amount are different from each other, it is not possible to judge whether how the discharge request amount of each of the customer facilities 106a to c has been considered. In such a case, since it is not possible to judge an available power amount in the customer facilities 106a to c, there may occur a problem that a use plan and the like of a load is not made and it is not possible to effectively use power supplied from the electricity storage device 101. In this regard, in the present exemplary embodiment, the management device 102 sets a power amount (an assignment power amount), which can be virtually supplied to the customer facilities 106a to c from the electricity storage device 101, based on a storage battery discharge amount and requested discharge power information.

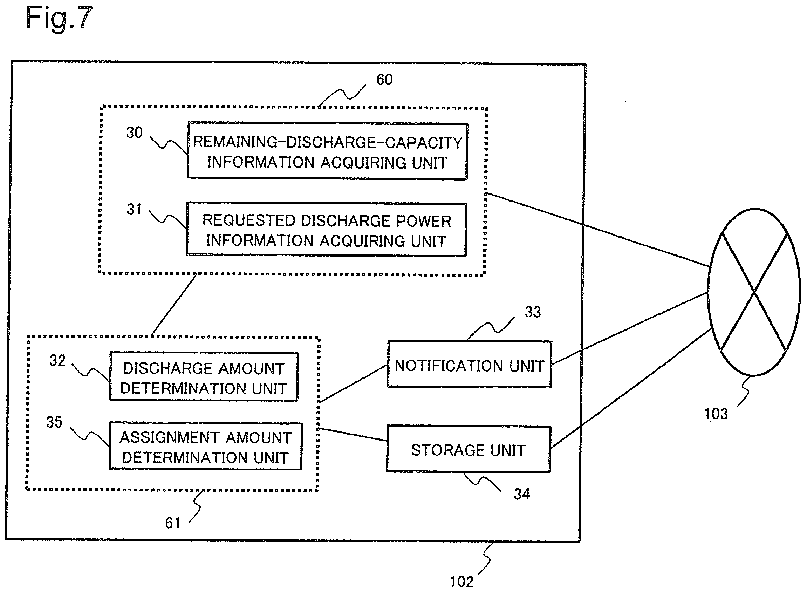

Fig. 7 illustrates an example of a functional block diagram of the management device 102 of the present exemplary embodiment. The management device 102 includes the information acquiring unit 60, the determination unit 61, the notification unit 33, and the storage unit 34. The information acquiring unit 60 includes the remaining-discharge-capacity information acquiring unit 30 and the requested discharge power information acquiring unit 31. The determination unit 61 includes the discharge amount determination unit 32 and an assignment amount determination unit 35. The configurations of the information acquiring unit 60, the discharge amount determination unit 32, the notification unit 33, and the storage unit 34 are similar to those of the first and second exemplary embodiments.

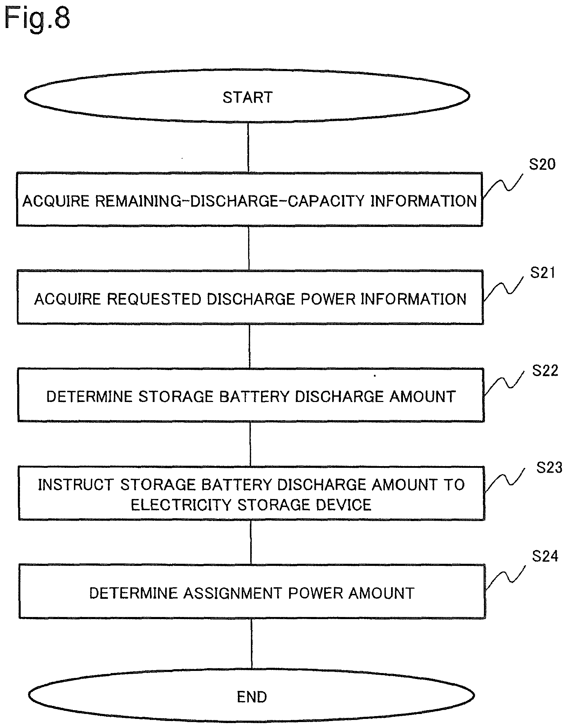

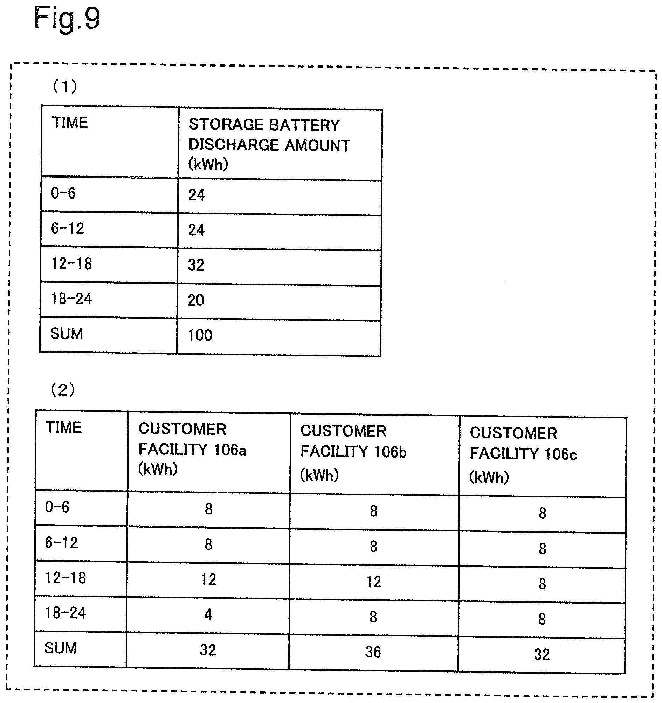

A process in which the discharge amount determination unit 32 determines a storage battery discharge amount and a process in which the assignment amount determination unit 35 determines assignment power amounts of the customer facilities 106a to c will be described using the flowchart of Fig. 8 and Fig. 9. A description of parts common to the first and second exemplary embodiments will be appropriately omitted.

The remaining-discharge-capacity information acquiring unit 30 acquires remaining-discharge-capacity information (S20). An example of the acquired remaining-discharge-capacity information is illustrated in (1) of Fig. 4. The requested discharge power information acquiring unit 31 acquires requested discharge power information (S21). An example of the acquired requested discharge power information is illustrated in (2) of Fig. 4. The requested discharge power information acquiring unit 31 transmits the remaining-discharge-capacity information and the requested discharge power information to the discharge amount determination unit 32.

The discharge amount determination unit 32 determines a storage battery discharge amount based on the acquired remaining-discharge-capacity information and requested discharge power information (S22).

The discharge amount determination unit 32 can determine a storage battery discharge amount proportional to requested power amount for discharges of each time period and generate a discharge schedule. An example of the storage battery discharge amount determined by the discharge amount determination unit 32 based on the remaining-discharge-capacity information of (1) of Fig. 4 and the requested discharge power information of (2) of Fig. 4 is illustrated in of (1) of Fig. 9. (1) of Fig. 9 is an example of the discharge schedule in which the storage battery discharge amounts of each time period have been determined. When it is assumed that a dischargeable amount is 100 kWh, the sum of requested power amounts for discharge is 125 kWh, and the sum of requested power amounts for discharge during 12 o'clock to 18 o'clock is 40 kWh, the discharge amount determination unit 32 can determine a storage battery discharge amount during 12 o'clock to 18 o'clock as follows. The discharge amount determination unit 32 determines a storage battery discharge amount in other time periods in a similar manner.

The storage battery discharge amount during 12 o'clock to 18 o'clock $=100\times(40/125)=32$[kWh]

The notification unit 33 transmits the storage battery discharge amount determined by the discharge amount determination unit 32 to the electricity storage device 101 (S23). The system controller 23 having acquired the storage battery discharge amount controls the electricity storage device 101 according to the storage battery discharge amount.

Subsequently, the discharge amount determination unit 32 transmits the storage battery discharge amount and the requested power amount for discharge to the assignment amount determination unit 35. The assignment amount determination unit 35 determines a power amount (an assignment power amount), which can be virtually supplied to each customer facility, based on the acquired storage battery discharge amount and requested discharge power information (S24).

When the sum of the requested power amounts for discharge of the customer facilities 106a to c is equal to or less than the storage battery discharge amount, the assignment amount determination unit 35 may employ the requested power amounts for discharge of each of the customer facilities 106a to c as assignment power amounts of each of the customer facilities 106a to c.

Furthermore, when the sum of the requested power amounts for discharge of the customer facilities 106a to c exceeds the storage battery discharge amount, the assignment amount determination unit 35 may allocate the acquired storage battery discharge amount to each of the customer facilities 106a to c based on the requested discharge power information, and determine an assignment power amount. For example, the assignment amount determination unit 35 calculates a ratio of requested discharge power information among the customer facilities in a period in which the storage battery discharge amount is determined. The assignment amount determination unit 35 can determine the calculated ratio of each customer facility of the storage battery discharge amount in the period as an assignment power amount of each customer facility.

An example of a process of determining the assignment power amount of each of the customer facilities 106a to c will be described using (2) of Fig. 4 and (2) of Fig. 9. Here, it is assumed that a storage battery discharge amount at 12 o'clock to 18 o'clock is 32 kWh and requested power amount for discharges of each of the customer facilities 106a, 106b, and 106c are respectively 15 kWh, 15 kWh, and 10 kWh. In this case, the assignment amount determination unit 35 calculates the assignment power amount of the customer facility 106a by using the following Equation.
Assignment Power Amount of Customer Facility 106a

$$= \text{Storage Battery Discharge Amount}$$
$$\times \left( \frac{\text{Requested Power Amount for Discharge of Customer Facility 106a}}{\text{Sum of Requested Power Amounts for Discharge of All Customer Facilities 106a to c}} \right)$$
$$= 32 \times \{15 / (15 + 15 + 10)\} = 12 [\text{kWh}]$$

The assignment amount determination unit 35 can also determine other time periods and the assignment power amounts of the customer facilities 106b and 106c in a similar manner. An example of the determined assignment power amounts of the customer facilities 106a, 106b, and 106c is illustrated in (2) of Fig. 9.

In addition to the above example, the assignment amount determination unit 35 may employ a value, which is obtained by equally dividing a storage battery discharge amount by the number of customer facilities, as the assignment power amount of each of the customer facilities 106a to c. By equally dividing the storage battery discharge amount by the number of customer facilities, it is possible to set the same assignment power amount in the customer facilities 106a to c. A customer facility having a requested power amount for discharge of 0 may not be included in the divisor.

When the assignment amount determination unit 35 determines the assignment power amounts, the process of the management device 102 is ended. The assignment amount determination unit 35 transmits the determined assignment power amounts to the storage unit 34. The storage unit 34 stores the assignment power amounts.

Furthermore, the notification unit 33 can notify the customer facilities 106a to c of information on the assignment power amounts via the network 103. For example, the notification unit 33 can notify customers of periods, in which the assignment power amounts have been determined, and the assignment power amounts. The customer facilities 106a to c having received the information indicating the assignment power amounts output the information on the assignment power amounts to their output units, so that it is possible to notify power amounts available by customers.

The measurement units 53 and electronic appliances (not illustrated) provided in the customer facilities 106a to c can compare power supply amounts of the customer facilities with the assignment power amounts obtained from the management device 102. When the difference between the power supply amounts and the assignment power amounts exceeds a threshold value, the notification unit 33 may notify customers of the fact that the threshold value is exceeded. The customers having received the notification can reflect the notification in power saving or an operation plan of the loads 50. The threshold value can be appropriately set by the customers.

In the above example, the process of determining the storage battery discharge amount and the process of determining the assignment power amount are continuously performed. However, these processes may be individually performed. For example, the storage battery discharge amount may be determined whenever a discharge period is ended and the assignment power amount may be determined every constant period (every week or every month).

According to the present exemplary embodiment, it is possible to achieve operations and effects similar to those of the first and second exemplary embodiments.

Furthermore, according to the present exemplary embodiment, a power amount (an assignment power amount), which can be virtually supplied to each customer facility from the electricity storage device 101, is set based on the requested discharge power information and the storage battery discharge amount. Therefore, even when the sum of requested power amounts for discharge is different from an actual storage battery discharge amount, it is possible to appropriately determine an assignment power amount.

Furthermore, according to the present exemplary embodiment, a value, which is obtained by equally dividing a storage battery discharge amount by the number of customer facilities having a requested power amount for discharge larger than 0, can be employed as an assignment power amount. According to such a present exemplary embodiment, it is possible to reduce the problem that an assignment power amount is set in a customer requesting no supply of power from a storage battery and a small assignment power amount is set in a customer having requested the supply of power from the storage battery.

Furthermore, according to the present exemplary embodiment, the notification unit 33 outputs determined assignment power amounts to the output units (not illustrated) of the customer facilities 106a to c, so that it is possible to notify customers of the assignment power amounts. The customers can utilize the acquired assignment power amounts for the purpose of power saving target of the customer facilities 106a to c and the use plan of loads such as an operation schedule of the loads 50.

Furthermore, according to the present exemplary embodiment, the notification unit 33 compares determined assignment power amounts with power supply amounts indicating power (or power consumed in the customer facilities 106a to c) actually supplied to the customer facilities 106a to c from the distribution network 105. When the difference between the assignment power amounts and the power supply amounts exceeds a threshold value, it is possible to notify customers of the fact that the threshold value is exceeded. According to such a present exemplary embodiment, the customers can confirm the difference between the power supply amounts and the assignment power amounts. The customers suppress the use of the loads 50 by the notification, so that it is possible to reduce an amount of power to be purchased from the power system 100.

[Fourth embodiment]

The management device 102 of the present exemplary embodiment determines a storage battery discharge amount by further using priorities assigned to the customer facilities 106a to c. The management device 102 determines assignment power amounts by using the priorities.

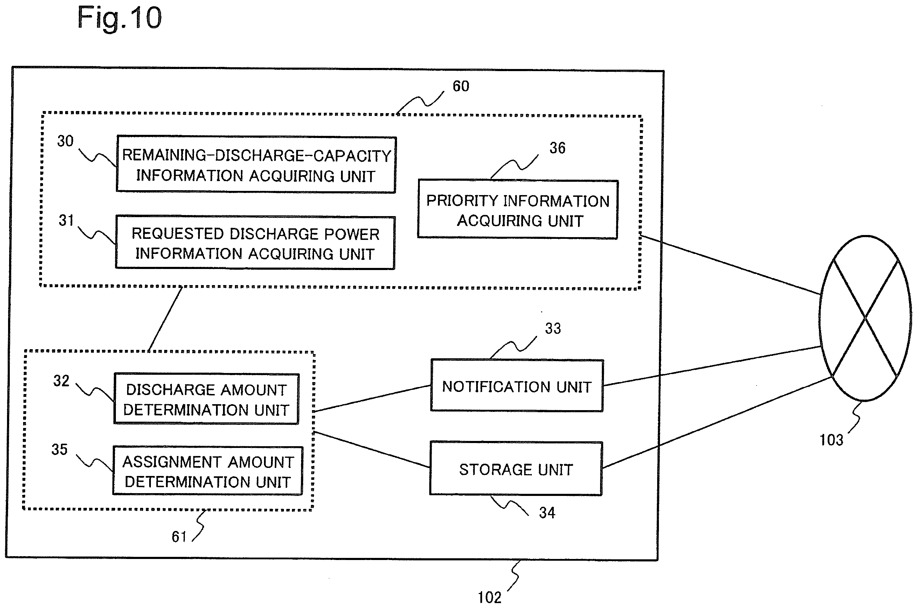

Fig. 10 illustrates an example of a functional block diagram of the management device 102 in the present exemplary embodiment. The present exemplary embodiment is different from the first to third exemplary embodiments in that the information acquiring unit 60 includes a priority information acquiring unit 36. Hereinafter, the configurations of the priority information acquiring unit 36 and the assignment amount determination unit 35 will be described. Only parts different from those of the first to third exemplary embodiments will be described and common parts will be appropriately omitted.

The priority information acquiring unit 36 acquires priority information indicating the priorities of the customer facilities 106a to c. The priorities are information indicating the degree of priorities of requested discharge power information among the customer facilities. For example, a customer facility with a relatively high demand may have a high priority. Alternatively, each customer may present conditions of the usage charges (kWh/yen and the like), use time periods and the like of the electricity storage device 101, and the highest priority may be assigned to a customer facility of a customer having presented the most useful condition. Different priorities may be assigned to all customer facilities, or a priority may be assigned to each group (for example, customer facilities owned by the same customer) formed by a plurality of customer facilities. The priorities may be always equal to each other, or may be different from each other every time period divided by the unit time.

Means by which the priority information acquiring unit 36 acquires priorities are not specially limited. For example, the storage unit 34 may store priority information in advance. Then, the priority information acquiring unit 36 may acquire priorities from the storage unit 34. Furthermore, the priority information acquiring unit 36 may store in advance address information of an external device (for example, a management sever and the like of a collective house). The priority information acquiring unit 36 may access the external device by itself at a predetermined timing, thereby acquiring priorities.

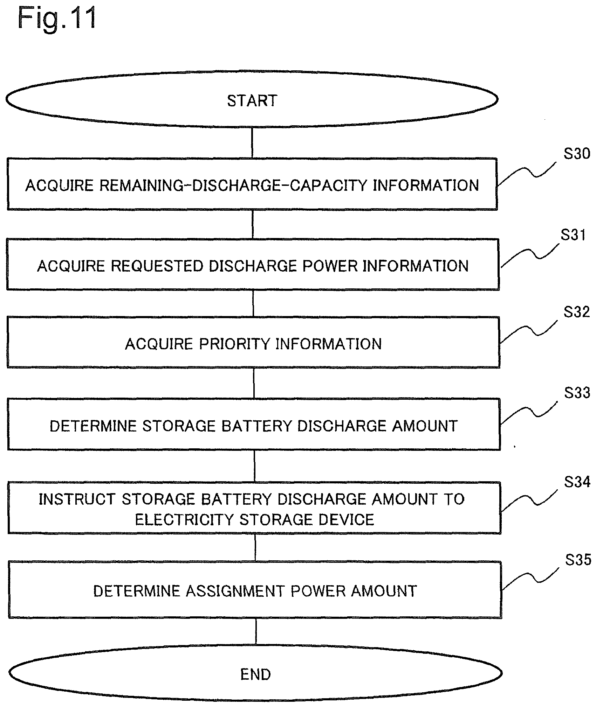

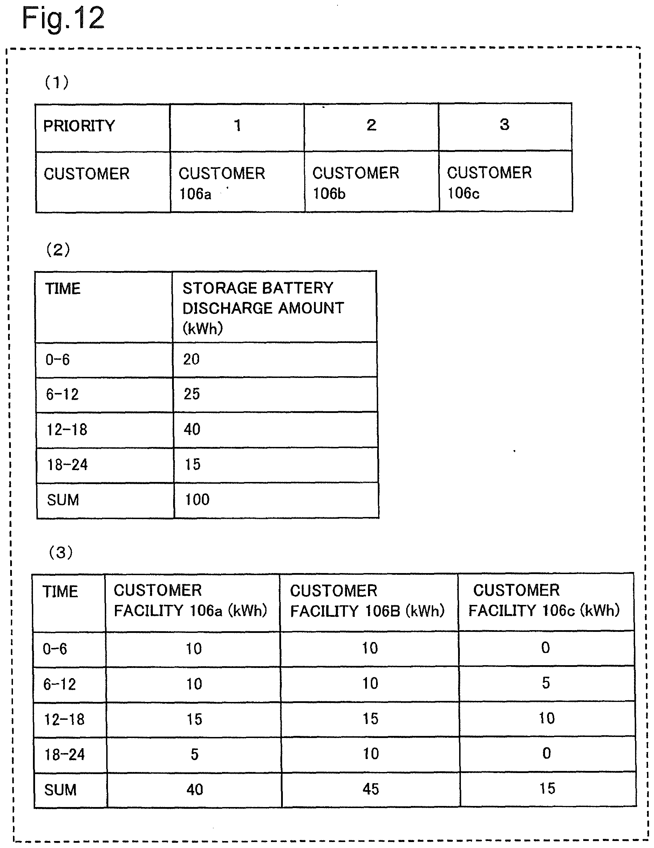

A process in which the discharge amount determination unit 32 determines a storage battery discharge amount by further using priority information will be described using the flowchart of Fig. 11 and Fig. 12.

The remaining-discharge-capacity information acquiring unit 30 acquires remaining-discharge-capacity information (S30). An example of the acquired remaining-discharge-capacity information is illustrated in (1) of Fig. 4. The requested discharge power information acquiring unit 31 acquires requested discharge power information (S31). An example of the acquired requested discharge power information is illustrated in (2) of Fig. 4.

The priority information acquiring unit 36 acquires priority information (S32). An example of the acquired priority information is illustrated in (1) of Fig. 12. Here, a high priority is assigned in the order of the customer facilities 106a, 106b, and 106c.

The discharge amount determination unit 32 determines a storage battery discharge amount based on the remaining-discharge-capacity information, the requested discharge power information, and the priority information (S33). The discharge amount determination unit 32 can preferentially consider requested power amount for discharges of the customer facilities 106a to c with a high priority, thereby determining the storage battery discharge amount.

An example of a process in which the discharge amount determination unit 32 determines a discharge schedule is illustrated. An example of a discharge schedule determined based on (1) of Fig. 4, (2) of Fig. 4, and (1) of Fig. 12 is illustrated in (2) of Fig. 12. For example, requested power amount for discharges of the customer facility 106a with the highest priority in each time period are assumed to be 10 kWh, 10 kWh, 15 kWh, and 5 kWh, respectively. The sum of the requested power amounts for discharge is equal to or less than a dischargeable amount and the requested power amount for discharges in each time period are equal to or less than a maximum storage battery discharge amount. Therefore, the requested power amount for discharge of the customer facility 106a is fixed as a storage battery discharge amount.

Here, since the fixed storage battery discharge amount is 40 kWh, a dischargeable amount of 60 kWh remains. Therefore, the discharge amount determination unit 32 also adds a requested power amount for discharge 45 kWh of the customer facility 106b with the second highest priority as the storage battery discharge amount. Furthermore, the discharge amount determination unit 32 distributes 15 kWh, which is an excess as a dischargeable amount, to an arbitrary time period. Since the fixed storage battery discharge amount of the time period of 12 o'clock to 18 o'clock, for which the sum of the requested power amounts for discharge of the customer facilities 106a and 106b is the largest, is 30 kWh, a spare of 10 kWh is added such that the storage battery discharge amount becomes the maximum storage battery discharge amount. The discharge amount determination unit 32 further employs the remaining 5 kWh as a storage battery discharge amount of 6 o'clock to 12 o'clock, for which the requested power amounts for discharge of the customer facilities 106a and 106b is large, among time periods before and after 12 o'clock to 18 o'clock, and determines a discharge schedule.

According to such an example, a large storage battery discharge amount can be set in a time period in which a requested power amount for discharge is large. Moreover, a spare is distributed to time periods before and after a time period in which the requested power amount for discharge is maximal, so that a large storage battery discharge amount can be set in a time period with a high probability that power will be used.

The method for distributing a spare of a dischargeable amount is not limited thereto. For example, the discharge amount determination unit 32 may employ a spare power amount as a storage battery discharge amount of a time period in which a requested power amount for discharge of a customer (the customer facility 106c in the above example) with a next priority among customer facilities used in fixing a discharge request amount is large. Alternatively, the discharge amount determination unit 32 may equally divide the spare power amount by the number of dischargeable time periods and distribute the spare power amount to each dischargeable time period. Alternatively, the discharge amount determination unit 32 may calculate a ratio of requested power amounts for discharge of a customer (the customer facility 106c in the above example) with a next priority during each dischargeable time period among the customer facilities 106 used in fixing a storage battery discharge amount, and distribute the spare power amount according to the calculated ratio. In other examples, the spare power amount may be stored without discharge.

The notification unit 33 transmits the determined storage battery discharge amount to the electricity storage device 101 (S34). The system controller 23 having acquired the storage battery discharge amount controls the electricity storage device 101 according to the acquired storage battery discharge amount.

In S35, the assignment power amount determination unit 35 compares the determined storage battery discharge amount with the sum value of requested power amounts for discharge of a related period and determines assignment power amounts of each customer facility.

When the storage battery discharge amount is equal to or more than the sum value of the requested power amounts for discharge of the related period, the assignment power amount determination unit 35 may determine the requested power amounts for discharge of each of the customer facilities 106a to c as the assignment power amounts of each of the customer facilities 106a to c.

When the storage battery discharge amount is smaller than the sum value of the requested power amounts for discharge of the related period, the assignment amount determination unit 35 can determine the assignment power amounts based on the storage battery discharge amount, the requested discharge power information, and the priority information. The assignment amount determination unit 35 may determine the assignment power amounts preferentially to customers with high priorities. (3) of Fig. 12 illustrates an example of the determined assignment power amounts. It is assumed that the storage battery discharge amount of the time period during 12 o'clock to 18 o'clock is 40 kWh. It is assumed that the requested power amounts for discharge of the customer facilities 106a, 106b, and 106c are respectively 15 kWh, 15 kWh, and 10 kWh. In this case, the customer facilities 106a and 106b employ the requested power amounts for discharge as assignment power amounts. Then, remaining 5 kWh is employed as an assignment power amount of the customer facility 106c. For other time periods, assignment power amounts are determined in a similar manner.

The assignment amount determination unit 35 transmits the determined assignment power amounts to the storage unit 34. The storage unit 34 can store the assignment power amounts. The notification unit 33 can transmit the assignment power amounts to the customer facility 106, an external server and the like via the network 103. The customer facility 106 having received information indicating the assignment power amounts can output the assignment power amounts to the output units of the customer facilities 106a to c, thereby notifying power amounts available by customers.

In the above example, the assignment power amount determination when different priorities are assigned to customer facilities is described. However, a method by which the assignment amount determination unit 35 determines assignment power amounts is not limited thereto. When a priority is assigned to each group including a plurality of customers, an assignment power amount may be determined for each group and all assignment power amounts of the customer facilities in the group may be determined so as to be equal to one another.

According to the present exemplary embodiment described above, it is possible to achieve operations and effects similar to those of the first to third exemplary embodiments.

Furthermore, according to the present exemplary embodiment, priorities are assigned to customers, so that it is possible to determine a storage battery discharge amount satisfying a requested power amount for discharge of a customer facility with a high priority. According to such a present exemplary embodiment, it is possible to perform discharge of a storage battery in a period in which a requested power amount for discharge with a high degree of demand is set and to suppress discharge of the storage battery in a period in which a requested power amount for discharge with a low degree of demand is set. Therefore, it is possible to effectively use power discharged from the storage battery.

Furthermore, according to the present exemplary embodiment, priorities are assigned to customers, so that it is possible to determine assignment power amounts preferentially to customer facilities with a high priority. According to such a present exemplary embodiment, it is possible to determine assignment power amounts having reflected the degree of demand of the supply of power from the electricity storage device 101 to the customer facilities 106a to c which have a large demand, have made a useful contract and the like.

[Fifth embodiment]

In the third and fourth exemplary embodiments, an assignment power amount, which can be virtually supplied to the customer facility, is determined. However, when power is supplied from the power system 100 and the electricity storage device 101 to the plurality of customer facilities 106a to c via the common distribution network 105, the following problem occur. According to the problem, it is not possible to specify whether power supplied to the customer facilities 106a to c is power discharged from the electricity storage device 101 or power supplied from the power system 100.

In this regard, in the present exemplary embodiment, a power amount (a deemed amount) deemed to be received from the electricity storage device 101 by each of the customer facilities 106a to c is determined using an assignment power amount.

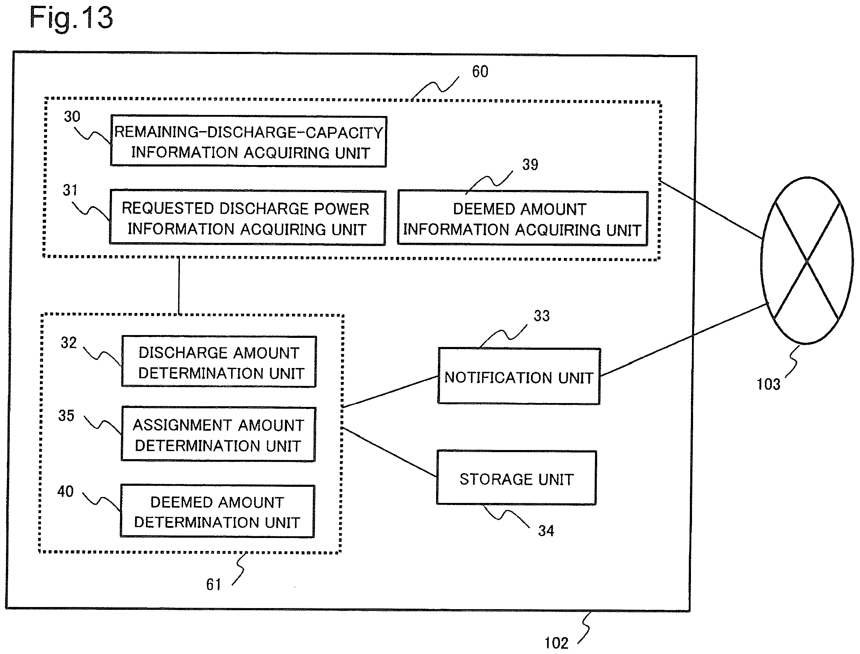

Fig. 13 illustrates an example of a functional block diagram of the management device 102 of the present exemplary embodiment. In the present exemplary embodiment, the management device 102 further includes a deemed amount information acquiring unit 39 and a deemed amount determination unit 40. The configurations of the remaining-discharge-capacity information acquiring unit 30, the requested discharge power information acquiring unit 31, the discharge amount determination unit 32, the assignment amount determination unit 35, and the notification unit 33 are similar to those of the first to fourth exemplary embodiments. Hereinafter, a function of determining a deemed amount will be described and a description of functions common to the first to fourth exemplary embodiments will be appropriately omitted.

The deemed amount information acquiring unit 39 acquires an assignment power amount of each of the customer facilities 106a to c as deemed amount information. Preferably, the deemed amount information acquiring unit 39 acquires power supply information of each of the customer facilities 106a to c. The power supply information is information indicating a power supply amount indicating at least one of an amount of power supplied from the distribution network 105 to the loads 50 of the customer facilities 106a to c in a constant period and an amount of power consumed in the loads 50.

A method by which the deemed amount information acquiring unit 39 acquires the deemed amount information is not limited thereto. For example, the storage unit 34 stores the deemed amount information in advance. Then, the deemed amount information acquiring unit 39 may acquire the deemed amount information from the storage unit 34. Furthermore, the deemed amount information acquiring unit 39 may store in advance address information of an external device (for example, a management server and the like of a collective house). The deemed amount information acquiring unit 39 may access the external device by itself at a predetermined timing, thereby acquiring deemed amount information.

The deemed amount determination unit 40 determines a deemed amount based on at least an assignment power amount. More preferably, the deemed amount information acquiring unit 39 uses supply power information. The deemed amount information acquiring unit 39 can compare the assignment power amount with the supply power amount and determine a smaller amount of these amounts as a deemed amount, by acquiring supply power information. The deemed amount information acquiring unit 39 can determine an amount of power actually used in the customer facilities 106a to c or an amount of supplied power as a deemed amount. Therefore, it is possible to reduce the problem that a power amount not actually used is also converted as a used power amount and related expenses are imposed on customers.

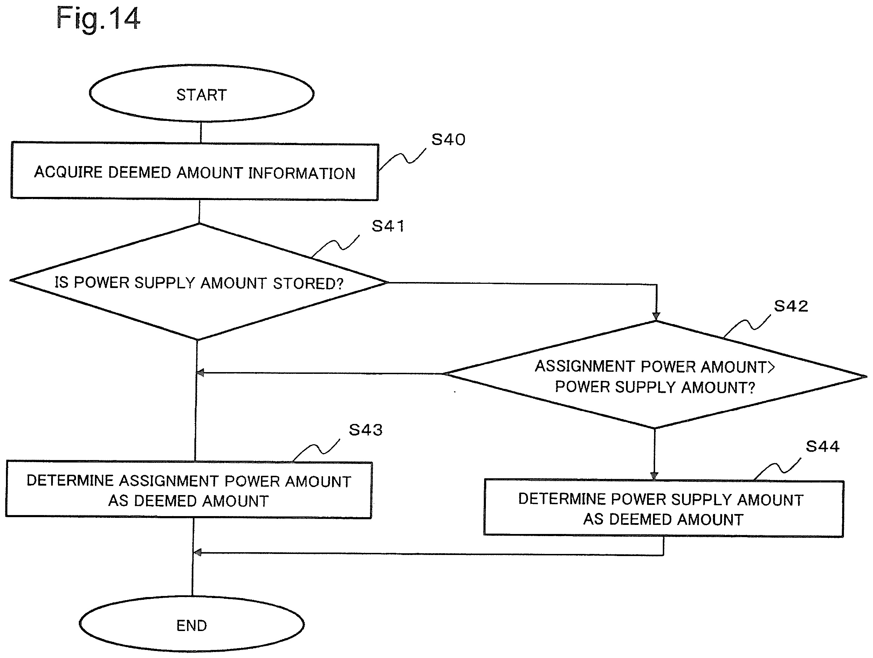

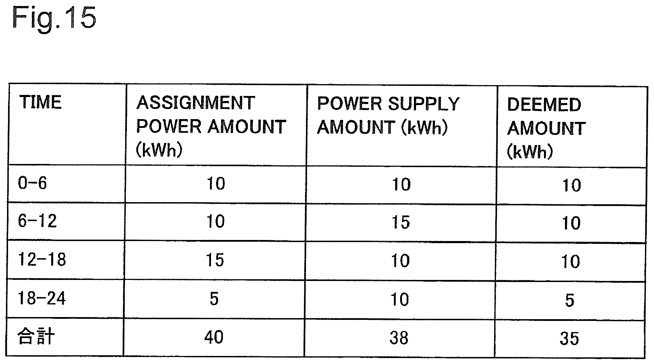

An example of a process for determining a deemed amount will be described using the flowchart of Fig. 14 and Fig. 15.

The deemed amount information acquiring unit 39 acquires an assignment power amount as a deemed amount information (S40). Moreover, the deemed amount information acquiring unit 39 may acquire a power supply amount.

The deemed amount determination unit 40 determines the deemed amount based on the deemed amount information acquired by the deemed amount information acquiring unit 39. Fig. 15 illustrates an example of the acquired deemed amount information. Fig. 15 illustrates an example in which an assignment power amount and a power supply amount are acquired as deemed amount information of the customer facility 106a.

When no power supply amount is stored as the deemed amount information, that is, when only the assignment power amount is acquired (S41), the deemed amount determination unit 40 determines the assignment power amount of each of the customer facilities 106a to c as a deemed amount of each customer facility in a related period (S43).

When the power supply amount is further acquired as the deemed amount information, the deemed amount determination unit 40 compares the assignment power amount with the power supply amount (S42). When the assignment power amount is smaller than the power supply amount, the deemed amount determination unit 40 may employ the assignment power amount as a deemed amount of a related customer facility (S43). In Fig. 15, since the assignment power amount of the customer facility 106a during 6 o'clock to 12 o'clock is 10 kWh and the power supply amount is 15 kWh, the deemed amount of the customer facility 106a can be determined to 10 kWh.

When the assignment power amount is equal or more than the power supply amount, the deemed amount determination unit 40 employs the power supply amount as a deemed amount of a related customer facility (S45). In Fig. 15, since the assignment power amount of the customer facility 106a during 12 o'clock to 18 o'clock is 15 kWh and the power supply amount is 10 kWh, the deemed amount of the customer facility 106a is determined to 10 kWh.

The deemed amount determination unit 40 transmits the determined deemed amount to the notification unit 33 and ends the process of the management device 102. The notification unit 33 transmits the deemed amount to the storage unit 34, the measurement unit 53 of the customer facility 106, a server connected to the network 103, and the like. Furthermore, the notification unit 33 may allow the output units of the customer facilities 106a to c to display the deemed amount to notify customers of the deemed amount.

According to the present exemplary embodiment, it is possible to achieve operations and effects similar to those of the first to fourth exemplary embodiments.

Furthermore, according to the present exemplary embodiment, it is possible to determine a power amount (a deemed amount) deemed to be received from the electricity storage device 101 by customer facilities. According to such a present exemplary embodiment, even though it is not possible to specify whether power supplied to the customer facilities 106a to c is power discharged from the electricity storage device 101 or power supplied from the power system 100, it is possible to determine a deemed power amount deemed to be received from the electricity storage device 101 by each customer facility. As a consequence, when expenses regarding purchase, installation, and maintenance of the electricity storage device 101 are shared among shared customer facilities, each customer can determine expenses to be shared based on the deemed amount.

Furthermore, according to the present exemplary embodiment, it is possible to set an assignment power amount as a deemed amount. According to such a present exemplary embodiment, since the assignment power amount is clearly indicated as the deemed amount, it is possible to calculate the deemed amount before the supply of power to the customer facilities 106a to c is started. Therefore, expenses of the customer facilities 106a to c regarding the use of the electricity storage device 101 can be grasped in advance based on the deemed amount.

[Sixth embodiment]

Depending on the requested power amounts for discharge of the customer facilities 106a to c and periods for setting the requested power amounts for discharge, it is predicted that a large difference may occur in the assignment power amounts of the customer facilities 106a to c and profits obtained by receiving power from the electricity storage device 101.

In this regard, in the present exemplary embodiment, the priorities of the customer facilities 106a to c are updated such that a small difference occurs in the use situations of the electricity storage device 101 or profits obtained by receiving power among the customer facilities 106a to c. After the priorities are updated, the discharge amount determination unit 32 and the assignment amount determination unit 35 can determine a storage battery discharge amount and an assignment power amount by using the updated priorities.

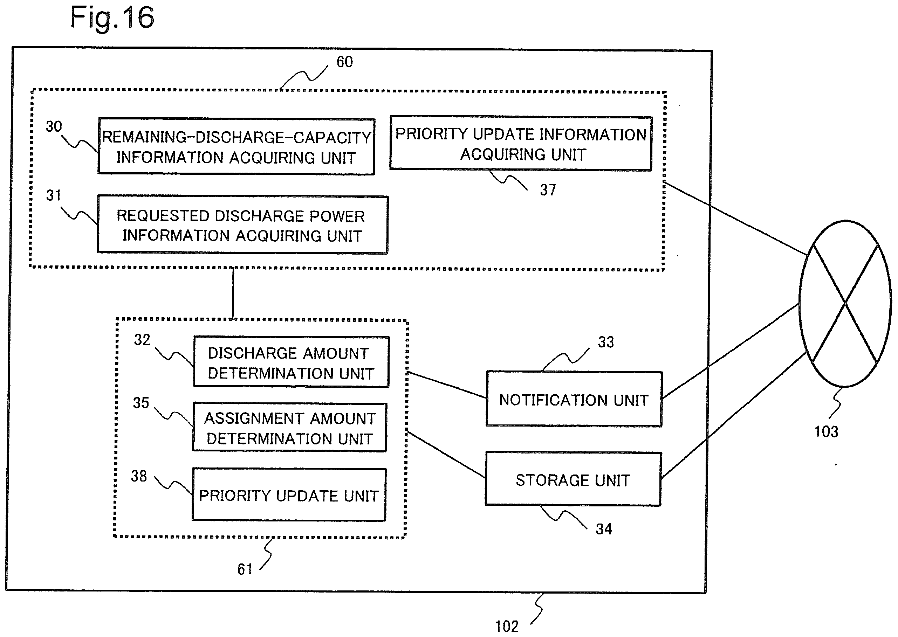

Fig. 16 illustrates an example of a functional block diagram of the management device 102 of the present exemplary embodiment. In the present exemplary embodiment, the information acquiring unit 60 of the management device 102 further includes a priority update information acquiring unit 37, and the determination unit further includes a priority update unit 38. The configurations of the remaining-discharge-capacity information acquiring unit 30, the requested discharge power information acquiring unit 31, the discharge amount determination unit 32, the assignment amount determination unit 35, and the notification unit 33 are similar to those of the first to fifth exemplary embodiments. Hereinafter, a function of updating a priority will be described and a description of functions common to the first to fifth exemplary embodiments will be appropriately omitted.

The priority update information acquiring unit 37 acquires priority update information for updating priorities of each customer facility. As the priority update information, it is possible to use a history of an assignment power amount, a history of a power supply amount, a history of a deemed amount, electric charge paid by each customer, privilege information and the like. The privilege information, for example, may indicate that predetermined privilege is obtained when an amount of power supplied from the power system 100 in a certain time period is smaller than a predetermined value.

The method for acquiring the priority update information is not specifically limited. For example, the storage unit 34 stores in advance the assignment power amount, the deemed amount, the priority information and the like. Then, the priority update information acquiring unit 37 acquires the priority update information from the storage unit 34. Furthermore, the priority update information acquiring unit 37 may store in advance address information of an external device (for example, a server and the like of a power supplier). The priority update information acquiring unit 37 may access the external device by itself at a predetermined timing, thereby acquiring priority update information. In other examples, the priority update information acquiring unit 37 may transmit a request to the external device such that the priority update information is transmitted from the communication units 51 of the customer facilities 106a to c at a predetermined timing (every day, every week, and every month).

The priority update unit 38 updates priorities based on the priority update information. For example, the priority update unit 38 may update priorities such that a difference of the use situations of the customer facilities 106a to c receiving power from the electricity storage device 101 becomes small. Alternatively, the priority update unit 38 may group the customer facilities 106a to c according to the attributes and scales of houses, offices, factories and the like, and update priorities such that the use situations among the customer facilities 106 of the same group become equal to one another.

The priority update unit 38 may update priorities in such a manner that the sum values of assignment power amounts or deemed amounts of the customer facilities 106a to c in a constant period are equalized or a difference of the sum values is equal to or less than a reference value. For example, the priority update unit 38 assigns a high priority to a customer facility in which the sum of assignment power amounts or deemed amounts in a period before update is relatively small. By so doing, the priority update unit 38 allows each of the sum values of power amounts assigned to each customer facility in a constant period to come to be an equal value. When a difference occurs in the sum values, the priority update unit 38 allows the difference to be equal to or less than the reference value. For example, the reference value may be 10%, 5% and the like of the maximal value of the sum value of customer facilities in a constant period.

An example of a processing flow will be described using (3) of Fig. 12. The priority update information acquiring unit 37 acquires assignment power amounts of the customer facilities 106a to c in a period before update as priority update information. (3) of Fig. 12 illustrates an example of the assignment power amounts of the customer facilities 106a to c in the period before the update. In (3) of Fig. 12, it is assumed that the sum of assignment power amounts of one day is 40 kWh in the customer facility 106a, is 45 kWh in the customer facility 106b, and is 15 kWh in the customer facility 106c. In this case, the priority update unit 38 can assign a high priority in the order of the customer facility 106c, the customer facility 106a, and the customer facility 106b in which the assignment power amounts are sequentially small.

Furthermore, the priority update unit 38 may update priorities such that profits obtained by receiving power from the electricity storage device 101 for a constant period become equalized, by further using electric charge information and privilege information. The profits, for example, include electric charge, which can be reduced by receiving power from the electricity storage device 101, acquired privilege and the like. The priority update unit 38 may calculate the profits by using Equation (1) below and update priorities such that the calculated profits become equalized.

$$\text{Profits} = (\text{Power Purchasing Price of Assignment Time Period}$$
$$- \text{Electricity Cost Required for Charging Electricity Storage Device 101})$$
$$\times \text{Assignment Power Amounts of Customer Facilities} \qquad \text{Equation(1)}$$

An example of a processing flow will be described using (3) of Fig. 12. (3) of Fig. 12 illustrates an example of assignment power amounts of a period before update. It is assumed that electric charge is 50 yen/kWh in a time period of 0 o'clock to 12 o'clock and is 100 yen/kWh in a time period of 12 o'clock to 24 o'clock, and power of 50 yen/kWh is accumulated in the electricity storage device 101. In this case, profits obtained by the customer facility 106a can be calculated as follows.

$$\text{Profits of Customer Facility } 106a$$
$$= \{50 \times (10+10) + 100 \times (15+5)\} - 50 \times 40$$
$$= (1000 + 2000) - 2000 = 1000 \quad [\text{Yen}]$$

Similarly, profits of the customer facilities 106b and 106c can be calculated to 1250 and 500, respectively. In this case, the priority update unit 38 assigns a high priority to the customer facility 106c, the customer facility 106a, and the customer facility 106b in an ascending order of profits. When the electricity storage device 101 is charged using a power generating facility and the like provided to the customer facilities 106a to c and when no charge expenses is occurred, electricity cost required for charging the electricity storage device 101 is set to 0. When privilege is obtained using privilege information and the like in a time period in which power is received from the electricity storage device 101, the privilege is also added as profits.

When the priority update unit 38 updates priorities, processes in the management device 102 are ended. The priority update unit 38 may transmit the updated priorities to the storage unit 34 and the storage unit 34 may store the priorities.

The notification unit 33 may transmit the updated priorities to an external server and the customer facilities 106a to c via the network 103. The notification unit 33 may allow the output units of the customer facilities 106a to c to output the updated priorities, thereby notifying customers of the priorities.

In a period after the update, the updated priorities can be used as requested discharge power information. The update timing of the priorities is not specifically limited. For example, the requested discharge power information acquiring unit 31 may request the priority update unit 38 to update priorities when acquiring requested discharge power information. The requested discharge power information acquiring unit 31 may update priorities at a predetermined timing (every day, every week and the like), and store the storage unit 34 with the priorities as the requested discharge power information.

According to the present exemplary embodiment, it is possible to achieve operations and effects similar to those of the first to fourth exemplary embodiments.

Furthermore, according to the present exemplary embodiment, it is possible to update priorities in such a manner that power amounts assigned to each of the customer facilities 106a to c in a constant period of the electricity storage device 101 come to be an equal value.

According to such a present exemplary embodiment, it is possible to allow a difference of the assignment power amounts in a constant period to be small regardless of the size of requested discharge power information of the customer facilities 106a to c. As a consequence, it is possible to reduce the problem that a customer can constantly use power supplied from the electricity storage device 101 and another customer is not able to use the power supplied from the electricity storage device 101 and purchases power supplied from the power system 100.

Furthermore, according to the present exemplary embodiment, it is possible to update priorities such that profits obtained by allocating a storage battery discharge amount of the electricity storage device 101 are equalized. In general, it is assumed to operate the electricity storage device 101 at a cycle in which power with a low electricity cost (midnight power or in-house power generation of natural energy and the like) is accumulated in the electricity storage device and power is discharged from the electricity storage device in a time period with a high electricity cost (demand peak, daytime and the like). Therefore, as the power is used according to the cycle, there is a tendency to high profits. Therefore, according to the present exemplary embodiment, it is possible to update priorities such that profits due to reduction of electric charge caused by receiving power from the electricity storage device 101, privilege and the like are equalized. As a consequence, for example, it is possible to reduce a complaint in which profits of a customer facility with a large assignment power amount of a time period in which electric charge is high are larger than profits of a customer facility with a large assignment power amount of a time period in which electric charge is low.

[Seventh embodiment]

In the present exemplary embodiment, at least one of a power generator and a second electricity storage device is connected to the distribution network 105 and a storage battery discharge amount is determined by further using power generation amount prediction information indicating a prediction value of an amount of power supplied by at least one of the power generator and the second electricity storage device.

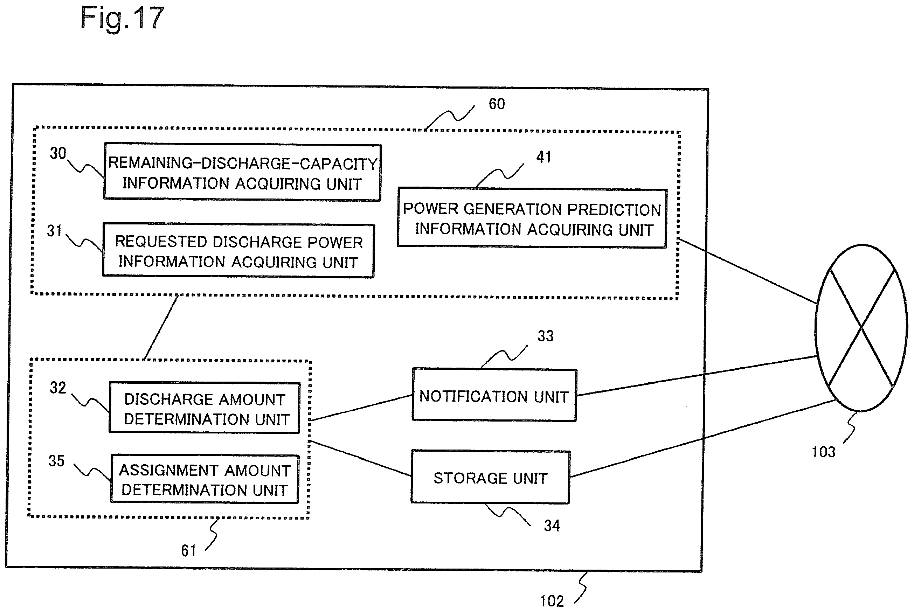

Fig. 17 illustrates an example of a functional block diagram of the management device 102 in the present exemplary embodiment. As illustrated in Fig. 17, the management device 102 includes the remaining-discharge-capacity information acquiring unit 30, the requested discharge power information acquiring unit 31, a power generation prediction information acquiring unit 41, the discharge amount determination unit 32, the assignment information determination unit 35, the notification unit 33, and the storage unit 34. The configurations of the notification unit 33 and the storage unit 34 are similar to those of the first to fifth exemplary embodiments. Hereinafter, functions different from those of the first to sixth exemplary embodiments will be described.

The power generation prediction information acquiring unit 41 acquires power generation prediction information indicating power generation amount prediction of a power generator (not illustrated) and a second electricity storage device (not illustrated), which are power supply sources different from the power system 100 and supply power to the loads 50 of the customer facility 106 or the electricity storage device 101. The second electricity storage device is a movable body and is an electricity storage device (for example, a portable storage battery, an electric vehicle and the like) that receives power from a network other than the distribution network 105.

In the present exemplary embodiment, means for predicting a power generation amount are not specifically limited. In the case of a power generator that generates power by using natural energy, for example, a power generation amount may be predicted using information of weather forecasting and the like. In the case of including the second electricity storage device, a dischargeable amount of the second electricity storage device may be employed as a power generation amount.

An owner of the power generator or the second electricity storage device can permit or reject the supply of power, which is generated from the power generator, or power, which is charged in the second electricity storage device, to the customer facilities 106a to c. The permission or rejection of the supply can also be changed according to time periods or the customer facilities 106a to c. Moreover, the owner may set the permission or rejection of the supply with respect to a constant rate of the power generated from the power generator or the power charged in the second electricity storage device.

Information indicating the permission or rejection of the supply (called sharing possibility information) is inputted from an input unit of the power generator or the second electricity storage device and is stored in the storage unit 34 of the management device 102.

The requested discharge power information acquiring unit 31 may acquire, from the storage unit 34, the sharing possibility information indicating the sharing possibility of power, which is supplied from the power generator and the second electricity storage device, in the customer facility 106. The discharge amount determination unit 32 determines a storage battery discharge amount by further using the power generation prediction information.

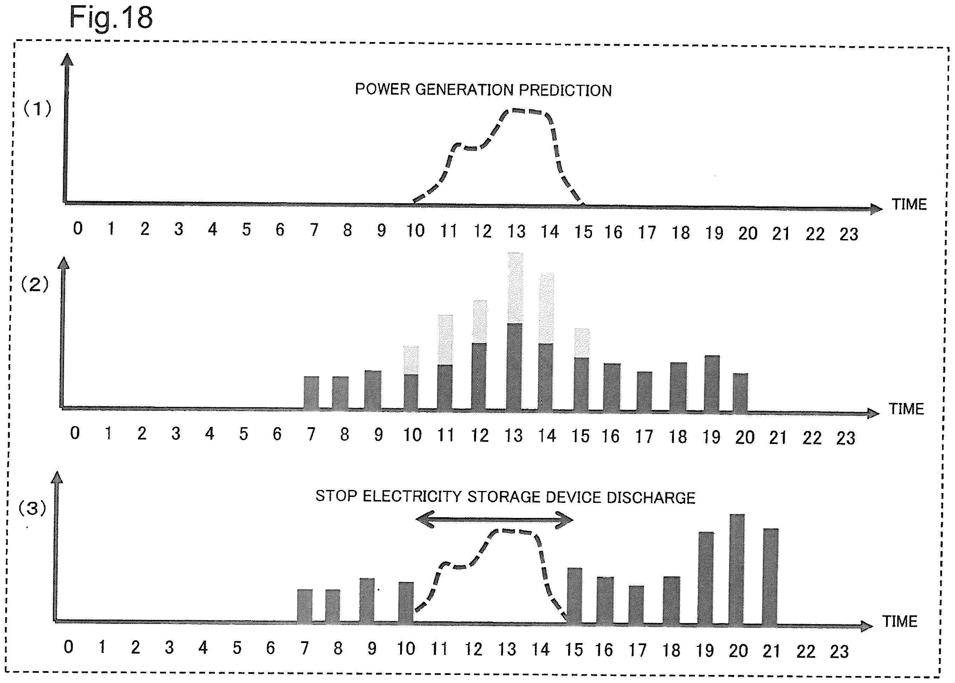

Hereinafter, an example of a process in which the discharge amount determination unit 32 determines a storage battery discharge amount will be described using Fig. 18. In (1) of Fig. 18, a horizontal axis denotes a time and a vertical axis denotes an amount (Wh) of power discharged from the electricity storage device 101. The dot line indicates a power generation prediction amount of the power generator and the second electricity storage device. It is assumed that power generation is possible during 10 o'clock to 15 o'clock.

The discharge amount determination unit 32 determines the storage battery discharge amount based on the power generation prediction information, the remaining-discharge-capacity information, and the requested discharge power information. When a power generation prediction amount every time period is indicated, a discharge schedule, in which a storage battery discharge amount is determined every time period divided by the unit time, may be generated.

The discharge schedule is generated, so that it is possible to perform discharge control with a high precision in which it is possible to determine a storage battery discharge amount according to power generation prediction and to absorb an error between the storage battery discharge amount and an actual power generation amount.

In (2) of Fig. 18, an example of the determined discharge schedule is illustrated. In the time period of 10 o'clock to 15 o'clock in which power generation is predicted to be possible, the sum of the storage battery discharge amount and the predicted power generation amount is a power amount which can be supplied to the distribution network 105. When the sum of the storage battery discharge amount and the predicted power generation amount is larger than the sum of requested power amounts for discharge in a related period, the difference can be supplied to the power system 100.

In (3) of Fig. 18, another example is illustrated. When the sum value of requested power amounts for discharge is equal to or less than the power generation prediction amount, the storage battery discharge amount can be set to 0. In this time period, the electricity storage device 101 performs no discharge.

The power generator and the second electricity storage device supply power to the loads 50. As described above, when it is predicted that the power generator and the second electricity storage device can generate power, the discharge amount determination unit 32 may determine a storage battery discharge amount at which power is preferentially supplied to the loads 50 from the power generator and the second electricity storage device.

The discharge amount determination unit 32 may determine a storage battery discharge amount without putting a predicted power generation amount into the remaining-discharge-capacity information. When a price (a power selling price), by which generated power is provided to the power system 100, is higher than a price (a power purchasing price) of power supplied from a power supplier in a related time period, the generated power can be supplied (sold) to the power system 100. A reward obtained by supplying the power to the power system 100 can be distributed to the customer facilities 106a to c. In other examples, a predicted power generation amount can be supplied to and accumulated in the electricity storage device 101. After the power is accumulated, it is possible to acquire a dischargeable amount again and determine a storage battery discharge amount.

The assignment amount determination unit 35 determines an assignment power amount based on the requested discharge power information.

When it is possible to share power supplied from the power generator and the second electricity storage device, an assignment power amount is also determined with respect to an amount of power supplied from the power generator 107 and the second electricity storage device, similarly to the storage battery discharge amount. It is possible to share the power supplied from the power generator and the second electricity storage device, when the sharing possibility information acquired by the requested discharge power information acquiring unit 31 indicates the permission of sharing.

When it is not possible to share the power supplied from the power generator and the second electricity storage device, the power supplied from the power generator and the second electricity storage device is determined as assignment power amounts of the customer facilities 106a to c occupying the power generator and the second electricity storage device. It is not possible to share the power supplied from the power generator and the second electricity storage device, when the sharing possibility information acquired by the requested discharge power information acquiring unit 31 indicates the rejection of sharing.

According to the present exemplary embodiment, it is possible to achieve operations and effects similar to those of the first to sixth exemplary embodiments.

Furthermore, according to the present exemplary embodiment, by using the power generation amount prediction information of the power generator and the second electricity storage device, it is also possible to determine an appropriate storage battery discharge amount in consideration of the power generation amounts of the power generator and the second electricity storage device.

Furthermore, according to the present exemplary embodiment, based on the magnitude relation of a power purchasing price and a power selling price, it is possible to determine whether power generated from the power generator and the second electricity storage device is supplied to the power system 100, or is supplied to the electricity storage device 101 and the loads 50. When the power is supplied to the electricity storage device 101 and the loads 50, the discharge amount determination unit 32 may determine a discharge schedule such that the generated power is preferentially used. As a consequence, it is possible to effectively use the generated power.

Furthermore, according to the present exemplary embodiment, it is possible to determine a request power amount based on the sharing possibility information of the power generator and the second electricity storage device. For example, a customer having an electric vehicle can occupy a power accumulation amount related to the electric vehicle. When power is charged in the second electricity storage device at a price lower than that of power supplied by the power system 100 connected to the distribution network 105, it is possible to reduce the following problem. According to the problem, a customer having the second electricity storage device is deemed to purchase power from a power supplier with a high power selling price.

[Eighth embodiment]

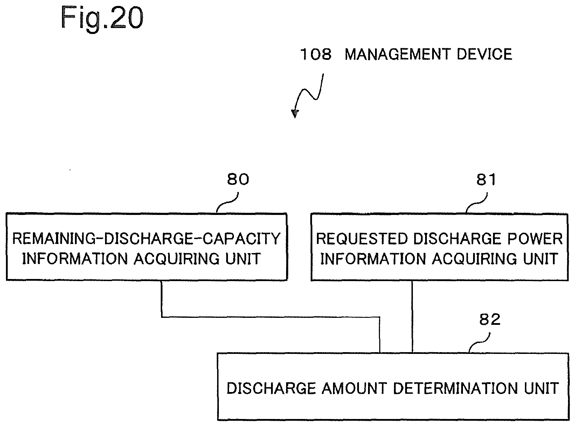

Fig. 20 is a diagram illustrating an example of a functional block diagram of the management device 102 having a minimum configuration in the present exemplary embodiment.

As illustrated in Fig. 20, the management device 102 includes a remaining-discharge-capacity information acquiring unit 80, a requested discharge power information acquiring unit 81, and a discharge amount determination unit 82.

The remaining-discharge-capacity information acquiring unit 80 acquires remaining-discharge-capacity information indicating an amount of power which can be discharged by the electricity storage device 101 connected to a plurality of customer facilities 106.

The requested discharge power information acquiring unit 81 acquires requested discharge power information indicating a requested power amount for discharge which is requested as power supply from the electricity storage device 101 to each of the plurality of customer facilities 106.

The discharge amount determination unit 82 determines a storage battery discharge amount, which indicates an amount of power to be discharged by the electricity storage device 101, based on the remaining-discharge-capacity information and the requested discharge power information thereof.

Next, a description will be provided for elements of a hardware unit when the present exemplary embodiment is implemented with a computer.

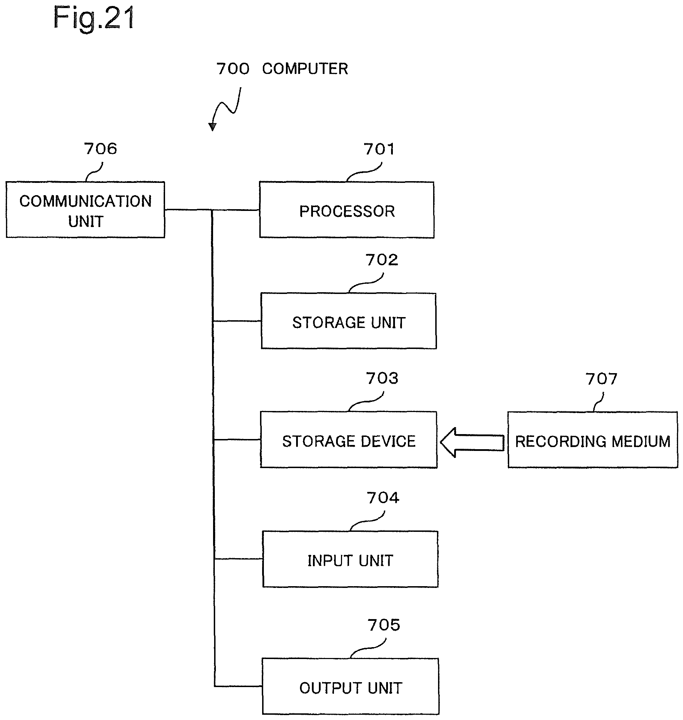

Fig. 21 is a block diagram illustrating a hardware configuration of a computer for implementing the management device 102 of the present exemplary embodiment.

As illustrated in Fig. 21, a computer 700 includes a processor 701, a storage unit 702, a storage device 703, an input unit 704, an output unit 705, and a communication unit 706. The computer 700 further includes a recording medium (or a storage medium) 707 provided from an exterior. For example, the recording medium 707 is a nonvolatile recording medium (a non-transitory recording medium) that non-transitorily storing information. The recording medium 707 may be a transitory recording medium that stores information as signals.

The processor 701 operates an operating system (not illustrated) to control an entire operation of the computer 700. For example, the processor 701 reads a program and data from the recording medium 707 installed at the storage device 703 and writes the read program and data in the storage unit 702. The program, for example, is a program causing the computer 700 to perform the operations of the flowchart illustrated in Fig. 5.

The processor 701 performs various processes as the remaining-discharge-capacity information acquiring unit 80, the requested discharge power information acquiring unit 81, and the remaining-discharge-capacity determination unit 82 illustrated in Fig. 20 according to the read program or based on the read data.

The processor 701 may download the program and the data to the storage unit 702 from an external computer (not illustrated) connected to a communication network (not illustrated).

The storage unit 702 stores the program and the data. The storage unit 702 may store the remaining-discharge-capacity information, the requested discharge power information, the storage battery discharge amount, information set based on these types of information, and the like. A part of the storage unit 702, for example, may be included as a part of the remaining-discharge-capacity information acquiring unit 80, the requested discharge power information acquiring unit 81, and the discharge amount determination unit 82, as the storage unit 34 illustrated in Fig. 3.

The storage device 703, for example, is an optical disk, a flexible disk, a magneto-optic disk, an external hard disk, a semiconductor memory and the like. The storage device 703 computer-readably stores the program. The storage device 703 may store the remaining-discharge-capacity information, the requested discharge power information, the storage battery discharge amount, the information set based on these types of information, and the like. A part of the storage device 703, for example, may be included as a part of the remaining-discharge-capacity information acquiring unit 80, the requested discharge power information acquiring unit 81, and the discharge amount determination unit 82, as the storage unit 34 illustrated in Fig. 3.

The input unit 704 receives operation input by an operator or input of information from an exterior. A device used in the input operation, for example, is a mouse, a keyboard, an embedded key button, a touch panel and the like. The input unit 704 may be included as a part of the remaining-discharge-capacity information acquiring unit 80, the requested discharge power information acquiring unit 81, and the discharge amount determination unit 82.

The output unit 705, for example, is implemented with a display. The output unit 705, for example, is used for an input request to an operator by a GUI (GRAPHICAL User Interface), output presentation for an operator, and the like. The output unit 705 may be included as a part of the remaining-discharge-capacity information acquiring unit 80, the requested discharge power information acquiring unit 81, and the discharge amount determination unit 82.

The communication unit 706 implements an interface with an external device (for example, the electricity storage device 101, the customer facility 106, and the like). The communication unit 706 may be included as a part of the remaining-discharge-capacity information acquiring unit 80, the requested discharge power information acquiring unit 81, and the discharge amount determination unit 82.

As described above, each element of the functional unit of the management device 102 illustrated in Fig. 20 is implemented by the computer 700 having the hardware configuration illustrated in Fig. 21. Implementing means of each element of the computer 700 are not limited to the above. That is, the computer 700 may be implemented by one device physically coupled, or implemented by two or more physically separated devices connected with each other in a wired manner or wireless manner.

When the recording medium 707 having recorded the codes of the above-described program are supplied to the computer 700, the processor 701 may read and execute the codes of the program stored in the recording medium 707. Alternatively, the processor 701 may store the codes of the program stored in the recording medium 707 in either the storage unit 702 or the storage device 703 or both the storage unit 702 and the storage device 703. That is, the present exemplary embodiment includes an exemplary embodiment of the recording medium 707 that transitorily or non-transitorily stores the program (software) executed by the computer 700 (the processor 701). A recording medium non-transitorily storing information is also called a nonvolatile recording medium.

So far, each element of the hardware unit of the computer 700 implementing the management device 102 in the present exemplary embodiment is described.

Next, the electricity storage device 101 of the present exemplary embodiment will be described.

The management device 102 is connected to the electricity storage device 101 via the network 103 such as the Internet and a LAN (Local Area Network). The management device 102 communicates with the electricity storage device 101 to perform information transmission/reception, and performs control of the electricity storage device 101. The electricity storage device 101 performs power charge/discharge under the control of the management device 102.

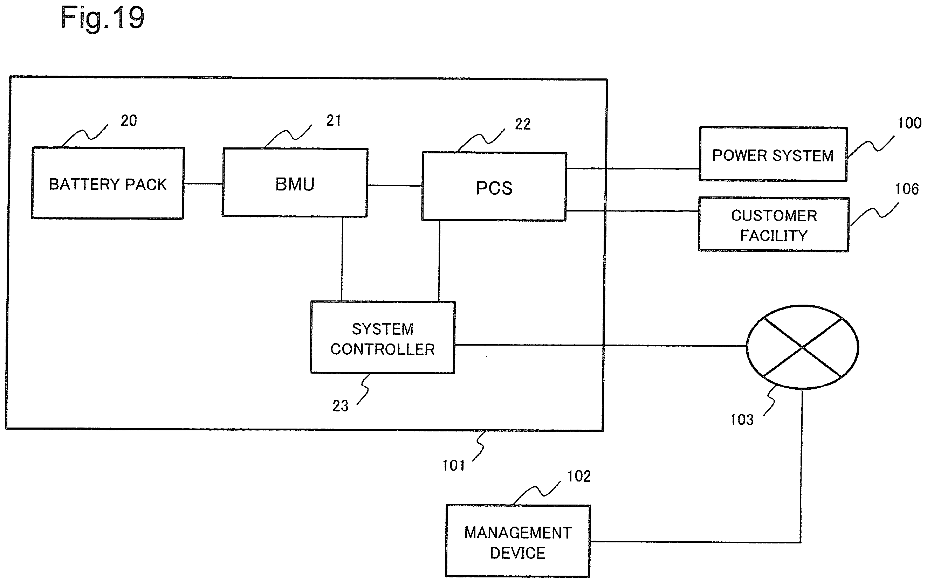

Fig. 19 illustrates an example of a functional block diagram of the electricity storage device 101. The electricity storage device 101 includes a battery pack 20, a BMU (Battery Management Unit) 21, a power conditioner (PCS, Power Conditioning System) 22, and the system controller 23.

The battery pack 20 includes a secondary battery capable of accumulating and discharging power, and for example, is a lithium ion secondary battery, a nickel-cadmium battery, a nickel-hydrogen battery, a lead storage battery, and the like. The battery pack 20 may be configured with one storage battery, or may be configured by connecting a plurality of storage batteries to one another in a serial and/or parallel manner according to a required output voltage.

The BMU 21 protects the battery pack 20 from overcharge, overdischarge, an overcurrent and the like. The PCS 22 performs power conversion for enabling a connection of the battery pack 20 and the power system 100, and controls charge for the battery pack 20 or discharge from the battery pack 20 to the customer facilities 106a to c. The power system 100 is a system which is managed by a power supplier (for example, an electric power company and the like) and supplies power to customers. The system controller 23 controls an entire operation of the electricity storage device 101 including the BMU and the PCS 22. The system controller 23 is connected to the network 103 and performs data transmission/reception with the management device 102 that manages the electricity storage device 101.

In Fig. 19, the battery pack 20, the BMU 21, the PCS 22, and the system controller 23 are divided and written; however, this indicates that four modules are logically separated from one another. These modules may be physically separated configurations, or may be integrally formed with one another through arbitrary combinations of at least a part thereof.

So far, the present invention is described with reference to exemplary embodiments; however, the present invention is not limited to the aforementioned exemplary embodiments. Various modifications which can be understood by a person skilled in the art can be made in the configuration and details of the present invention within the scope of the present invention.

This application claims priority based on Japanese Patent Application No. 2014-048333 filed on March 12, 2010, the content of which is incorporated herein in its entirety by reference.

**Reference signs List**

| | |
|---|---|
| 30 | remaining-discharge-capacity information acquiring unit |
| 31 | requested discharge power information acquiring unit |
| 32 | discharge amount determination unit |
| 33 | notification unit |
| 34 | storage unit |
| 35 | assignment amount determination unit |
| 36 | priority information acquiring unit |
| 37 | priority update information acquiring unit |
| 38 | priority update unit |
| 39 | deemed amount information acquiring unit |
| 40 | deemed amount determination unit |
| 41 | power generation prediction information acquiring unit |
| 50 | load |
| 51 | communication unit |
| 52 | input unit |
| 53 | measurement unit |
| 56 | output unit |
| 60 | information acquiring unit |
| 61 | determination unit |
| 80 | remaining-discharge-capacity information acquiring unit |
| 81 | requested discharge power information acquiring unit |
| 82 | discharge amount determination unit |
| 100 | power system |
| 101 | electricity storage device |
| 102 | management device |
| 03 | network |
| 104 | communication circuit |
| 105 | distribution network |
| 106 | customer facility |
| 700 | computer |
| 701 | CPU |
| 702 | storage unit |
| 703 | storage device |
| 704 | input unit |
| 705 | output unit |

706    communication unit
707    recording medium

**Claims**

1.  An information processing device comprising:

    remaining-discharge-capacity information acquiring means for acquiring remaining-discharge-capacity information indicating a power amount which is dischargeable by an electricity storage device connected to a plurality of customer facilities;
    requested discharge power information acquiring means for acquiring requested discharge power information indicating a requested power amount for discharge requested as power supply to each of the plurality of customer facilities from the electricity storage device; and
    discharge amount determination means for determining a storage battery discharge amount indicating an amount of power, which is discharged from the electricity storage device, based on the remaining-discharge-capacity information and the requested discharge power information.

2.  The information processing device according to claim 1, wherein the requested discharge power information acquiring means acquires requested discharge power information based on load prediction information indicating a prediction value of at least one of an amount of power supplied to each of the plurality of customer facilities and an amount of power consumed by loads of each of the plurality of customer facilities.

3.  The information processing device according to claim 1 or 2, wherein the requested discharge power information acquiring means acquires the requested discharge power information in which a requested power amount for discharge is set every time period divided by a unit time, and
    the discharge amount determination means determines the storage battery discharge amount, which is larger than a storage battery discharge amount in a time period in which a sum of the requested power amounts for discharge of the plurality of customer facilities is relatively small, in a time period in which the sum is relatively large.

4.  The information processing device according to claim 1 or 2, comprising:

    priority information acquiring means for acquiring priorities assigned to each of the plurality of customer facilities;
    wherein the requested discharge power information acquiring means acquires a requested power amount for discharge every time period divided by a unit time; and
    the discharge amount determination means determines a storage battery discharge amount, which is larger than a storage battery discharge amount in a time period in which a requested power amount for discharge of a customer facility with a high priority is small, in a time period in which the requested power amount for discharge of the customer facility with the high priority is large.

5.  The information processing device according to any one of claims 1 to 4, further comprising:

    assignment amount determination means for determining an assignment power amount indicating a power amount which is virtually suppliable to the plurality of customer facilities,
    wherein the assignment power amount, which is larger than an assignment power amount of a customer facility with a relatively small requested power amount for discharge, is set in a customer facility with a relatively large requested power amount for discharge.

6.  The information processing device according to any one of claims 1 to 4, further comprising:

    assignment amount determination means for determining an assignment power amount indicating a power amount which is virtually suppliable to each of the plurality of customer facilities,
    wherein the assignment amount determination means determines magnitude of the assignment power amount of each of the plurality of customer facilities according to the priorities.

7.  The information processing device according to claim 5 or 6, comprising:

    deemed amount acquiring means for acquiring the assignment power amount and a power supply amount supplied to each of the plurality of customer facilities; and

deemed amount determination means for determining a deemed amount indicating a power amount deemed to be received from the electricity storage device by each of the plurality of customer facilities,

wherein the deemed amount determination means determines a smaller value of the assignment power amount and the power supply amount as the deemed amount.

8. The information processing device according to any one of claims 4 to 7, further comprising:

priority update information acquiring means for acquiring priority update information indicating power use histories of each of the plurality of customer facilities,

wherein, based on the priority update information, the priority update means updates the priorities such that the assignment power amounts of the plurality of customer facilities during a constant period become equalized or profits obtained by receiving power from the electricity storage device become equalized.

9. The information processing device according to any one of claims 1 to 8, further comprising:

power generation prediction information acquiring means for acquiring power generation amount prediction information indicating a prediction value of a power amount supplied by at least one of a power generator and a second electricity storage device, which are power supply sources different from the power system,

wherein the discharge amount determination means determines the storage battery discharge amount by further using the power generation prediction information.

10. The information processing device according to claim 9, wherein the requested discharge power information acquiring means further acquires sharing possibility information indicating sharing possibility of a power amount, which is supplied from at least one of the power generator and the second electricity storage device, as the requested discharge power information, and

when the sharing possibility information indicates sharing impossibility, the assignment amount determination means determines a power amount, which is supplied from the power generator and the second electricity storage device, as the assignment power amount of the customer facility occupying the power generator and the second electricity storage device.

11. The information processing device according to any one of claims 4 to 10, further comprising:

notification means,

wherein the notification means compares the power supply amounts of the customer facilities with the assignment power amounts of the customer facilities, and notifies the customer facilities when a difference between the power supply amounts and the assignment power amounts exceeds a threshold value.

12. A storage battery sharing system comprising:

electricity storage means for being connected to a plurality of customer facilities and supplying power to the customer facilities;

remaining-discharge-capacity information acquiring means for acquiring remaining-discharge-capacity information indicating a power amount which is dischargeable by the electricity storage means;

requested discharge power information acquiring means for acquiring requested discharge power information indicating a requested power amount for discharge requested as power supply to each of the plurality of customer facilities from the electricity storage means;

discharge amount determination means for determining a storage battery discharge amount indicating power, which is discharged from the electricity storage means, by using the remaining-discharge-capacity information and the requested discharge power information; and

controlling means for controlling the electricity storage means according to the storage battery discharge amount.

13. A non-transitory computer readable recording medium stored with a storage battery sharing program, which causes a computer to perform:

a process of acquiring remaining-discharge-capacity information indicating a power amount which is dischargeable by an electricity storage device connected to a plurality of customer facilities;

a process of acquiring requested discharge power information indicating a requested power amount for discharge requested as power supply to each of the plurality of customer facilities from the electricity storage device; and
a process of determining a storage battery power amount indicating an amount of power, which is discharged from the electricity storage device, according to the acquired remaining-discharge-capacity information and requested discharge power information.

14. A non-transitory computer readable recording medium stored with a storage battery sharing program, which causes a computer to perform:

a process of determining an assignment power amount indicating a power amount of the storage battery discharge amount, which is virtually available by the customer facilities, by using remaining-discharge-capacity information indicating a power amount which is discharged by an electricity storage device connected to a plurality of customer facilities and requested discharge power information indicating a requested power amount for discharge requested as power supply to each of the plurality of customer facilities from the electricity storage device.

15. A storage battery discharge amount determination method, comprising:

determining a storage battery discharge amount, which indicates power discharged from an electricity storage device, by using remaining-discharge-capacity information indicating a power amount which is dischargeable by the electricity storage device connected to a plurality of customer facilities and requested discharge power information indicating a requested power amount for discharge requested as power supply to each of the plurality of customer facilities from the electricity storage device.

16. A deemed amount determination method, comprising:

determining a deemed amount, which is deemed to be received from an electricity storage device by each of a plurality of customer facilities, by using assignment power amount information indicating a power amount which is virtually suppliable to each of the plurality of customer facilities and power supply amount information indicating a power amount supplied to each of the plurality of customer facilities.

Fig.1

# Fig.2

Fig.3

REMAINING-DISCHARGE-CAPACITY
INFORMATION ACQUIRING UNIT

REQUESTED DISCHARGE POWER
INFORMATION ACQUIRING UNIT

NOTIFICATION
UNIT

DISCHARGE AMOUNT
DETERMINATION UNIT

STORAGE
UNIT

EP 3 118 962 A1

# Fig.4

(1)

| DISCHARGEABLE AMOUNT (kWh) | MAXIMUM STORAGE BATTERY DISCHARGE AMOUNT (kWh) |
|---|---|
| 100 | 40 |

(2)

| TIME | CUSTOMER FACILITY 106a (kWh) | CUSTOMER FACILITY 106b (kWh) | CUSTOMER FACILITY 106c (kWh) | SUM |
|---|---|---|---|---|
| 0-6 | 10 | 10 | 10 | 30 |
| 6-12 | 10 | 10 | 10 | 30 |
| 12-18 | 15 | 15 | 10 | 40 |
| 18-24 | 5 | 10 | 10 | 25 |
| SUM(kWh) | 40 | 45 | 40 | 125 |

(3)

| TIME | STORAGE BATTERY DISCHARGE AMOUNT (kWh) |
|---|---|
| 0-6 | 30 |
| 6-12 | 30 |
| 12-18 | 40 |
| 18-24 | 0 |
| SUM | 100 |

Fig.5

```
                    ┌─────────────────────────┐
                    │          START          │
                    └─────────────────────────┘
                                 │
    ┌────────────────────────────────────────────────────────┐      S10
    │  ACQUIRE REMAINING-DISCHARGE-CAPACITY INFORMATION       │
    └────────────────────────────────────────────────────────┘
                                 │
    ┌────────────────────────────────────────────────────────┐      S11
    │      ACQUIRE REQUESTED DISCHARGE POWER INFORMATION      │
    └────────────────────────────────────────────────────────┘
                                 │
    ┌────────────────────────────────────────────────────────┐      S12
    │     DETERMINE STORAGE BATTERY DISCHARGE AMOUNT          │
    └────────────────────────────────────────────────────────┘
                                 │
    ┌────────────────────────────────────────────────────────┐      S13
    │  INSTRUCT STORAGE BATTERY DISCHARGE AMOUNT TO           │
    │           ELECTRICITY STORAGE DEVICE                    │
    └────────────────────────────────────────────────────────┘
                                 │
                    ┌─────────────────────────┐
                    │           END           │
                    └─────────────────────────┘
```

Fig.6

# Fig.7

Fig.8

```
                    ┌─────────────────────────────┐
                    │           START             │
                    └──────────────┬──────────────┘
                                   │
                                   │                    S20
    ┌──────────────────────────────┴──────────────────────────┐
    │ ACQUIRE REMAINING-DISCHARGE-CAPACITY INFORMATION         │
    └──────────────────────────────┬──────────────────────────┘
                                   │
                                   │                    S21
    ┌──────────────────────────────┴──────────────────────────┐
    │ ACQUIRE REQUESTED DISCHARGE POWER INFORMATION            │
    └──────────────────────────────┬──────────────────────────┘
                                   │
                                   │                    S22
    ┌──────────────────────────────┴──────────────────────────┐
    │ DETERMINE STORAGE BATTERY DISCHARGE AMOUNT               │
    └──────────────────────────────┬──────────────────────────┘
                                   │
                                   │                    S23
    ┌──────────────────────────────┴──────────────────────────┐
    │ INSTRUCT STORAGE BATTERY DISCHARGE AMOUNT TO             │
    │ ELECTRICITY STORAGE DEVICE                               │
    └──────────────────────────────┬──────────────────────────┘
                                   │
                                   │                    S24
    ┌──────────────────────────────┴──────────────────────────┐
    │ DETERMINE ASSIGNMENT POWER AMOUNT                        │
    └──────────────────────────────┬──────────────────────────┘
                                   │
                    ┌──────────────┴──────────────┐
                    │            END              │
                    └─────────────────────────────┘
```

# Fig.9

(1)

| TIME | STORAGE BATTERY DISCHARGE AMOUNT (kWh) |
|------|------|
| 0-6 | 24 |
| 6-12 | 24 |
| 12-18 | 32 |
| 18-24 | 20 |
| SUM | 100 |

(2)

| TIME | CUSTOMER FACILITY 106a (kWh) | CUSTOMER FACILITY 106b (kWh) | CUSTOMER FACILITY 106c (kWh) |
|------|------|------|------|
| 0-6 | 8 | 8 | 8 |
| 6-12 | 8 | 8 | 8 |
| 12-18 | 12 | 12 | 8 |
| 18-24 | 4 | 8 | 8 |
| SUM | 32 | 36 | 32 |

Fig.10

60

30 REMAINING-DISCHARGE-CAPACITY
INFORMATION ACQUIRING UNIT

36 PRIORITY INFORMATION
ACQUIRING UNIT

31 REQUESTED DISCHARGE POWER
INFORMATION ACQUIRING UNIT

33 NOTIFICATION UNIT

32 DISCHARGE AMOUNT
DETERMINATION UNIT

35 ASSIGNMENT AMOUNT
DETERMINATION UNIT

STORAGE UNIT

34

61

103

102

EP 3 118 962 A1

34

## Fig.11

START

ACQUIRE REMAINING-DISCHARGE-CAPACITY INFORMATION — S30

ACQUIRE REQUESTED DISCHARGE POWER INFORMATION — S31

ACQUIRE PRIORITY INFORMATION — S32

DETERMINE STORAGE BATTERY DISCHARGE AMOUNT — S33

INSTRUCT STORAGE BATTERY DISCHARGE AMOUNT TO ELECTRICITY STORAGE DEVICE — S34

DETERMINE ASSIGNMENT POWER AMOUNT — S35

END

# Fig.12

(1)

| PRIORITY | 1 | 2 | 3 |
|---|---|---|---|
| CUSTOMER | CUSTOMER 106a | CUSTOMER 106b | CUSTOMER 106c |

(2)

| TIME | STORAGE BATTERY DISCHARGE AMOUNT (kWh) |
|---|---|
| 0-6 | 20 |
| 6-12 | 25 |
| 12-18 | 40 |
| 18-24 | 15 |
| SUM | 100 |

(3)

| TIME | CUSTOMER FACILITY 106a (kWh) | CUSTOMER FACILITY 106B (kWh) | CUSTOMER FACILITY 106c (kWh) |
|---|---|---|---|
| 0-6 | 10 | 10 | 0 |
| 6-12 | 10 | 10 | 5 |
| 12-18 | 15 | 15 | 10 |
| 18-24 | 5 | 10 | 0 |
| SUM | 40 | 45 | 15 |

# Fig.13

Fig.14

```
          ┌─────────────┐
          │    START    │
          └─────────────┘
                 │
    ┌────────────────────────────────┐  S40
    │ ACQUIRE DEEMED AMOUNT INFORMATION │
    └────────────────────────────────┘
                 │
           ◇ IS POWER SUPPLY AMOUNT STORED? ◇  S41
```

ACQUIRE DEEMED AMOUNT INFORMATION — S40

IS POWER SUPPLY AMOUNT STORED? — S41

ASSIGNMENT POWER AMOUNT> POWER SUPPLY AMOUNT? — S42

DETERMINE ASSIGNMENT POWER AMOUNT AS DEEMED AMOUNT — S43

DETERMINE POWER SUPPLY AMOUNT AS DEEMED AMOUNT — S44

END

Fig.15

| TIME | ASSIGNMENT POWER AMOUNT (kWh) | POWER SUPPLY AMOUNT (kWh) | DEEMED AMOUNT (kWh) |
|---|---|---|---|
| 0-6 | 10 | 10 | 10 |
| 6-12 | 10 | 15 | 10 |
| 12-18 | 15 | 10 | 10 |
| 18-24 | 5 | 10 | 5 |
| 合計 | 40 | 38 | 35 |

EP 3 118 962 A1

Fig.16

Fig.17

EP 3 118 962 A1

Fig.18

(1) POWER GENERATION PREDICTION

TIME

0 1 2 3 4 5 6 7 8 9 10 11 12 13 14 15 16 17 18 19 20 21 22 23

(2)

TIME

0 1 2 3 4 5 6 7 8 9 10 11 12 13 14 15 16 17 18 19 20 21 22 23

(3) STOP ELECTRICITY STORAGE DEVICE DISCHARGE

TIME

0 1 2 3 4 5 6 7 8 9 10 11 12 13 14 15 16 17 18 19 20 21 22 23

# Fig.19

EP 3 118 962 A1

# Fig.20

108 MANAGEMENT DEVICE

80

| REMAINING-DISCHARGE-CAPACITY INFORMATION ACQUIRING UNIT |

81

| REQUESTED DISCHARGE POWER INFORMATION ACQUIRING UNIT |

82

| DISCHARGE AMOUNT DETERMINATION UNIT |

## Fig.21

700 COMPUTER

706
COMMUNICATION UNIT

701
PROCESSOR

702
STORAGE UNIT

703
STORAGE DEVICE

707
RECORDING MEDIUM

704
INPUT UNIT

705
OUTPUT UNIT

## INTERNATIONAL SEARCH REPORT

International application No.

PCT/JP2015/001308

A.   CLASSIFICATION OF SUBJECT MATTER
*H02J3/32*(2006.01)i, *H02J7/00*(2006.01)i

According to International Patent Classification (IPC) or to both national classification and IPC

B.   FIELDS SEARCHED

Minimum documentation searched (classification system followed by classification symbols)
H02J3/32, H02J7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>A | JP 2011-101529 A  (Panasonic Electric Works Co., Ltd.),<br>19 May 2011 (19.05.2011),<br>paragraphs [0026] to [0058], [0076] to [0080]; fig. 1 to 3<br>& US 2012/0226387 A1    & WO 2011/055196 A1<br>& EP 2498366 A1          & CN 102630360 A | 1-2,5,9,<br>12-16<br>3-4,6-8,<br>10-11 |
| A | JP 2012-239260 A  (Toyota Motor Corp.),<br>06 December 2012 (06.12.2012),<br>entire text; all drawings<br>(Family: none) | 1-16 |

☐  Further documents are listed in the continuation of Box C.      ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 May 2015 (07.05.15) | Date of mailing of the international search report<br>    19 May 2015 (19.05.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012239260 A
- JP 2012095455 A
- JP 2014048333 A